# EUROPEAN PATENT SPECIFICATION

(11) **EP 4 322 887 B1**
(45) Date of publication and mention of the grant of the patent: **04.06.2025**
(21) Application number: 22721766.8
(22) Date of filing: 08.04.2022
(51) Int. Cl.: A61D 7/00, A01K 13/00

(54) **IMPROVEMENTS IN, OR RELATED TO, APPLICATORS AND DATA ACQUISITION THEREFOR**
VERBESSERUNGEN IN, ODER VERBUNDEN MIT, AUSGABEVORRICHTUNGEN UND DATENVERSAMMLUNG DAFÜR
AMÉLIORATIONS D'APPLICATEURS OU LIÉES À DES APPLICATEURS ET COLLECTE DE DONNÉES DANS CE BUT

(30) Priority: 12.04.2021 NZ 21774898
(43) Date of publication of application: 21.02.2024
(73) Proprietor: Datamars SA, 6814 Lamone (CH)
(72) Inventor: CALDER, David Bain, Ohaupo, 3881 (NZ)
(74) Representative: M. Zardi & Co S.A.
(86) International application number: PCT/EP2022/059523
(87) International publication number: WO 2022/218883

(56) References cited:
- WO-A1-2016/202339
- WO-A1-2018/107220

## Description

### TECHNICAL FIELD OF THE INVENTION

The present invention relates to applicators and data collection.

In particular, though not solely, the present invention is directed to applicators for animal husbandry and collection of data from them.

### BACKGROUND OF THE INVENTION

There is a desire in animal husbandry to capture data about the animal and any and all treatments and experiences the animal has undergone. At a basic level this extends from the time it was born, and the lineage of its parents.

However, increasingly this data capture occurs at every step of an animal's life, its regular weigh ins, food consumed (including what, when and from where), locations it has been (what farm, where, and for how long, what paddock etc), and medications applied.

This data forms part of a bigger information picture for farmers and the like, from herd weights, to energy use on farm, water usage and location, and herd yields for example.

One challenge to date is also ensuring when a medication or the like is applied to an animal, that the correct amount is applied, in the correct way, and to the correct animal.

There can be undesirable consequences in the instance where an incorrect amount is applied, for example too much as the dose is too high for that animal weight, or too little for that animal weight, or the full dose is not applied, for example application is initiated before animal contact, or the applicator is withdrawn from the animal before the full dose applied. In these situations the medication delivered, if too high may injure the animal, or make its products unsafe for consumption, or if too low may not properly protect the animal and make it vulnerable to disease, or similar affliction.

Likewise if the correct amount is applied, but incorrectly, then this may harm the animal, cause it undue stress, and again may result in under or overdosing of the animal with unintended and or undesirable consequences.

Further, specific medications may need to be applied to certain animals, and not others, or a specific amount applied based on weight. Identifying the correct animal and then correctly dosing it ensures the animal is protected or treated to the correct level, not under, or over dosed.

Previously there was not this focus on such precision farming. Herds were dosed with an average dose, whether they needed it or not, and whether they were over or under the target weight for that average dose. This led to over and underdosing the herd, even if on the whole, or average the dose received the correct amount. Further such application may result in overuse of a medication where it is not needed and thus cost which could be avoided. Alternatively, if too little is applied then medication may be left over which may not be able to be returned, or used at a later date, again causing cost that could otherwise be avoided.

Where such data was recorded, if at all, it was done manually, either by hand into a notebook, or into a laptop or similar. Such recording was reliant on the correct entry, matching to the animal etc, and correct and up to date data being available to make the dosing decision on. Such manual entry was open to errors of entry at the time, or at the later date into a database (for example at the conclusion of dosing) and also required additional users, time, and therefore cost. If the task became too onerous or time costly then it would not be done, or slowly fall from practice as there is only so much farming margin that can be tolerated being reduced, or only such much time a single farmer has to do all the tasks necessary to run a successful farm.

There are therefore short comings in the industry that need to be addressed which can save time, cost to the farmer and trauma to the animals.

Such benefits can be derived on all stock and cattle animals such as, but not limited to cows, sheep, swine, goats, alpaca, fowl and other birds. The benefits can extend over many product lines including, but not limited to milk, meat and hides.

An injection device with Hall sensor is known from WO2016202339 A1.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

It is therefore an object of the present invention to provide an improved applicator and data acquisition therefrom, or to provide an improved applicator that provides data on any one of more of the dose delivered, quality of application, or animal delivered to, or to overcome any one or more of the above shortcomings or address the above desiderata, or to at least provide the public with a useful choice.

### BRIEF DESCRIPTION OF THE INVENTION

An applicator of a treatment for an animal according to the present invention includes the features of claim 1.

The applicator is suitable to apply a dose of the treatment and therefore is also indicated here below as "dose applicator".

The applicator comprises a chamber including the treatment/medicament to be applied.

The chamber is for instance a barrel. The chamber may include a quantity of fluid suitable to apply a plurality of treatments to different animals.

The applicator includes means movable in the chamber. Movement of the means serves to eject the treatment outside the chamber (and ultimately outside the applicator) towards the animal. The movable means is for instance a piston. Delivery of one dose of the treatment is made by moving the piston in a predetermined volume/stroke inside the chamber.

The applicator includes actuating means to actuate the movable means (the piston). The actuating means includes preferably a handle, functionally connected to the movable means. Each actuation of the handle may deliver one dose.

According to the present invention, a control module is coupled to the chamber, outside the chamber. The control module implements or contributes to implement, among other, the function of sensing (detecting) how much fluid is delivered (ejected) outside the chamber, when the actuating means are actuated. Therefore, the control module is also indicated in the present application as "dose applicator sensor".

The control module includes a memory, a radio module, a battery and a processor unit.

The control module further includes a sensor or multiple sensors.

Hereafter the sensor may be also indicated with first sensor, first sensor unit or sensor unit, in general. These wordings (sensor, first sensor, first sensor unit or sensor unit) are not limiting on the number of sensors including in first sensor, first sensor unit or sensor unit. These wordings (sensor first sensor, first sensor unit or sensor unit) are used to for distinguishing the first sensor, first sensor unit or sensor unit with respect to other sensors, in particular with respect to a needle sensor.

The sensor unitis adapted to measure a signal proportional to the movement of the movable means in the chamber, when the movable means are actuated through the actuating means before releasing. The movement of the movable means is for instance the stroke of the piston in the chamber. The signal is used to indirectly measure the length of the movement made by the piston when the actuated means are actuated. A volume of treatment/medicament ejected is calculated based on the length measured, for instance the stroke of the piston.

For easy of explanation, it is also said in the description below that the sensor unit is adapted to measure the length of the movement of the movable means (piston) in the chamber, when the movable means are actuated through the actuating means, although the length is indirectly measured by means of the signal detected by the sensor unit.

The control module also includes communication means for communicating with an external device. The communication means includes preferably a Bluetooth module. The external device is preferably a smartphone or a rugged device.

The communication means are configured to transmit to the external device information concerning or suitable for determining a quantity of the treatment ejected outside the chamber.

In particular, according to different embodiments, the quantity of the treatment ejected outside the chamber (dose volume) can be calculated:
a) inside the control module, based on information on the chamber already available in the control module, this information could be provided by factory and including a size of the chamber;
b) inside the control module, based on information on the chamber transmitted to the control module;
c) in the external device, based on the length of movement transmitted by the control module to the external module and on information on the chamber already available in the external device or retrieved by the external module, this information including a size of the chamber.

More in particular, in said embodiment a), the memory and the processor of the control module are configured to store information on the chamber to which the control module is coupled (such as the size of the chamber) and the processor of the control module calculates the quantity of the treatment ejected outside the chamber (dose volume) based on the length of the movement of the piston and on the information of the chamber.

In the embodiment b) the control module is configured to receive information on the chamber (such as the size of the chamber) from the external device and is further configured to calculate the quantity of the treatment ejected outside the chamber based on the length of the movement of the piston and on the information on the chamber 28 received from the external device.

In the embodiment c), the control module is configured to transmit the length of movement of the piston to the external device, so as the quantity of the treatment ejected outside the chamber based on the length of the movement of the piston is calculated in the external device, based on information of the chamber stored in the external device, the information including the size of the chamber.

In one aspect of the disclosure, the control module transmits a signal proportional to or representative of the length movement of the piston to the external module (i.e. without calculating the length of the movement) and also the length of the movement is calculated in the external device.

In another aspect, which may be combined to other aspects of the present disclosure, the information on the chamber, including its size, are determined by the external device, based on a model series of the applicator, which is read by means of a tag reader.

The tag reader reads a tag attached to the applicator, the tag storing information on the model series and/or directly the size of the chamber. The tag reader is in radio communication with the external device. For instance, the tag reader is connected via Bluetooth module with the external device.

The communication means of the control module are configured to transmit to the external device further information, concerning at least one among the following:
- date and time stamp for each treatment,
- start time and end time of each the treatment,
- number of the treatments among a plurality of treatments deliverable trough the applicator.

The start time is detected when the sensor unit starts sensing a movement of the piston, in particular in one direction, corresponding to the direction for ejecting fluid. The end time is detected when the sensor unit stops sensing a movement of the piston, in particular towards the direction for ejecting fluid.

An adapter is provided to mount the control module on the applicator.

The adapted is suitable to couple (with a shape or other means) of the applicator. A known applicator, not manufactured to support or include the control module, may be adapted by means of the adapter to support the control module. A plurality of (different) adapters may be provided to couple to a plurality of (different) applicators. The plurality of adapters may be suitable to couple with a same (type of) control module, for instance with a shape coupling or other means of the control module and the adapted.

The (coupling) mounting is preferably not removable. More preferably, at least one part of the applicator, the control module or the control module is adapted to be broken (or removed by the means of special tools), if the adapted or the control module is dismounted, respectively, from the applicator or the adapter. The broken part prevents from using the control module with another adapter or applicator. However, electric part of the control module which is no more usable may be recycled.

In particular, the adapter include means to engage the adapter to the applicator and means to engage the adapter to the control module and coupling the control module to the chamber, in position suitable to sense movement of the piston in the chamber. The engagement of the adapter with the applicator and/or the engagement of the adapter with the control module is breakable. In an aspect, the engagement is removable only by means of special tools.

The applicator may be suitable to apply treatment in different ways, as specified in the following description, including treatment by injection.

For instance, in case of treatment for injection, the control module may be further configured to control correct insertion of a needle of the applicator inside the animal and to control the ratio of fluid ejected from the applicator (chamber) when the needle is correctly inserted.

This further control prevents from considering an injection properly applied to the animal if the amount of fluid ejected from the applicator is a normal dose range and part of the fluid ejected has not been delivered correctly to the animal, due to an inappropriate insertion of the needle or due to the fact that the insertion of the needle was correct but for an insufficient time for delivery a complete dose. Moreover, part of the fluid ejected may be not delivered correctly because the penetration depth of the needle was insufficient.

For instance, according to this aspect, the applicator includes a profile surrounding the needle to prevent contacts of the needle with other objects or bodies at rest.

The profile is retractable with respect to the needle to allow insertion of the needle in the animal's body under a pressure applied by the operator on the profile when it is put in contact with the animal skin. The profile is also said in the following description "needle guard".

For a correct insertion of the needle in the animal body, the pressure has to be sufficient to move the needle guard from the position at rest to an operative position, the position at rest and the operative position having a predetermined distance, which is known in advance.

In the operative position, the needle guard is retracted from the needle tip of a measure X and the needle tip is entered in the animal at a corresponding depth X, where the injection may be effectively applied.

According to the present disclosure, the control module includes a needle sensor unit adapted to measure a movement of the guard with respect to the needle. As indicated above in connection with the first sensor unit, also the needle sensor unit may detect a signal. By means of the signal detected, a length of the movement of the needle guard may be calculated. Technical details on the first sensor unit and the needle sensor unit, and the way they sense the signal, are provided in the detailed description.

The wireless communication means of the control module are configured to transmit to the external device information concerning or suitable for determining if the operative position is reached.

More particularly, it is checked how long the operative position has been kept while making the injection. This information (duration of injection in the correct position) is compared with the duration of the ejection of fluid outside the chamber.

In order to apply correctly the treatment/medicament the following condition have to apply:
1) the dose ejection/injection has to start only when the needle guard is completely retracted (the needle guard has to be in the operative positon) and
2) the dose ejection/injected has to be completed before the needle guard starts going back to the rest position.

For instance, for a correct dose application, the following timing should be detected:
- Ta: time when the needle guard starts retracting;
- Tb < Ta: time when the needle guard is at the completely retracted position (meaning that the needle is at the operative position for the injection);
- Tc < Tb: time when the ejection starts (this also correspond to the time when the injection inside the animal starts, since the needle guard has already reached the operative position at time Tb);
- Td<Tc: time when the ejection stops (based on the movement of the piston, moreover, it is determined whether the full dose has been ejected/injected);
- Te<Td: time when the needle guard starts retracting towards the position at rest (this happens when the dose has been already fully delivered)

More particularity, the dose has to be injected between Tb and Te.

It is therefore the movement of the piston between Tb and Te which gives information on whether or not a full dose has been delivered to the animal.

Movement of the piston before Tb or after Te, instead, gives information on quantity of liquid lost (since ejected from the chamber but not correctly injected into the animal).

The technical problem mentioned above is also solved by a method according to the present invention for controlling correct application of a treatment to an animal.

The method includes a communication between a control module of an applicator of the type described above and an external device, such as a smartphone or rugged device.

The communication is based on a radio communication protocol, for example Bluetooth.

The method comprises the following steps:
- initalizing a communication session between the control module and the external device;
- measuring through a sensor unit of the control module a length of movement of the movable means in the chamber, when the movable means are actuated through the actuating means of the applicator, wherein the step of measuring is part of a sequence of controls to be applied in the communication session, when the animal is treated;
- transmitting from the control module to the external device information concerning, or suitable for determining in the external device, a quantity of the treatment ejected outside the chamber;
- determining that the treatment has not been applied correctly if the quantity of the treatment is less than a predetermined quantity.

The control module, once initialized, can work with or without the external device. If the external device is present, the data can be exchanged between control module and external device. If the external device is not present, the control unit stores all session data in the memory and upload them once the external device gets connected (off-line mode operation).

The step of measuring the length of movement may be made indirectly by measuring a signal which is proportional to the movement made by the movable means (piston) in the chamber, by means of the sensor unit.

In an embodiment a) of the method, the control module stores information on the chamber of the applicator to which the control module is coupled, including a size of the chamber, and the processor calculates the quantity of the treatment ejected outside the chamber based on the length of the movement of the piston and on the information of the chamber. In this embodiment, the control module is programmed in factory with information of the applicator.

In an embodiment b) of the method, the control module receives information on the chamber from the external device, including a size of the chamber, and calculates the quantity of the treatment ejected outside the chamber based on the length of the movement of the piston and on said information on the chamber received from the external device.

In an embodiment c) of the method, the control module transmits the length of movement of the piston to the external device, and the external device calculates the quantity of the treatment ejected outside the chamber based on the length of the movement of the piston and on information of the chamber stored in the external device, the information including a size of the chamber.

In an aspect of the disclosure, external device is suitable to detect a type or model of applicator.

For instance, the applicator includes a tag identifying, among other, a model of the applicator, wherein the information of the chamber is associated to the model of the applicator, and the external device includes a tag reader, wherein the tag reader reads the tag and retrieves information on the chamber, including its size, from the tag of the applicator.

The tag reader of the external device may further read a RFID tag on the animal.

The RFID tag on the animal is used to electronically identify the animal.

Accordingly, the step of determining whether the treatment has not been applied correctly includes comparing the quantity of the treatment which has been ejected from the applicator with respect to the quantity necessary to correctly treat the animal, considered the information on the animal.

The invention also covers a control module which is applicable to an applicator of a treatment for an animal.

Hereafter, several aspects and embodiments are disclosed, along with particulars of the features already introduced above.

A dosing applicator sensor is provided to sense a dose of medication applied to at least one subject animal by the dose applicator.

The dosing applicator sensor is made of a sensing unit. The sensing unit comprises at least one sensor (first sensor or first sensor unit or sensor unit). The sensing unit is also referred by the term control module.

The sensing unit is connectable to the dose applicator.

More preferably, the sensing unit is configured to be applied to a prior art applicator, for instance by means of an adapter but once applied, remain fixed to the applicator or, when removed, is no more usable with another applicator, for instance due to rupture of a part thereof.

In other embodiments, the sensing unit is removable.

The sensing unit includes a first sensor (sensor unit) adapted to non-contactingly sense an amount of movement of a piston of the dose applicator.

The piston includes an element moving therewith, which is adapted to be sensed by the first sensor unit. The first sensor unit senses the movement of the piston from a first position to or towards a second position dispensing the dose of the medication to, and out, an applicator end of the dose applicator. The first sensor unit outputs a position signal which is proportional to the movement of the piston. For instance, the position signal is proportional to a length of the movement of the piston in an axial direction, also said "length of the movement".

The sensing unit includes a power source, and -an onboard memory.

In one embodiment, the memory stores position data for each position signal of the dose applied to the at least one subject animal. Position data includes the position of the piston in the chamber.

The memory store a time stamp data for the dose applied to the at least one animal. Time stamp data includes the time when the treatment (one dose) is started and the time when the treatment is ended.

The sensor unit may store or retrieve at least one information or characteristic of the dose applicator. The information includes for instance the size of the chamber or barrel of the applicator.

When combined with the position signal or position data (position of the piston in the chamber), the at least one characteristic of the dose applicator allows a determination of whether a full dose or part dose was dispensed, such that the amount of medication applied to each said at least one subject animal is known or can be calculated, and whether that dose was successful, or not, given the identity of that at least one animal.

Preferably the dose applicator applies the medication subcutaneously, topically, orally, nasally, by implantation into an orifice of the at least one subject animal (eg a bolus into the mouth).

Preferably the sensing unit is removably connectable to the dose applicator via a complimentary fitting or adaptor between the sensing unit and the dose applicator.

Preferably the complimentary fitting can be secured such that the sensing unit cannot be removed.

Preferably the non-contactingly sensing of the first sensor unit is any one or more of:
Magnetic, optical, or capacitive sensing.

Preferably if the non-contactingly sensing of the first applicator is magnetic, the piston, or part thereof, or connected thereto has a magnetic element for the first sensor unit to sense movement of.

In one embodiment of the disclosure, a second sensor of the sensing unit can in addition sense an identity or attribute of the dose applicator, user, application location, and or medication type, dose and volume to be applied.

However, preferably, according to the present invention, such second sensor is not provided in the sensor unit and attributes of the applicator (such as the size of the chamber), to which the sensor unit is destined to be applied, are stored at the factory in the memory of the sensor unit.

Accordingly, based on the movement of the piston and on the attributes of the applicator, such as the size of the chamber where the piston moves, a quantity of treatment delivered may be calculated in the second unit.

Preferably the first sensor and the second sensor (if provided) sense, and the onboard memory stores data derived from the first and second sensor.

Preferably the position data stores the amount of movement of the piston for that dose applied, or at least whether the amount of movement of the piston was sufficient to deliver the correct dose amount for a successful dose.

Preferably the correct dose amount for a successful dose will depend on the unique identity of attribute of the at least one subject animal and may lie between a minimum dose volume and a maximum dose volume.

According an aspect, the unique identity or attribute of the at least one subject animal is detected by the external device, for instance by means of a communication with a RFID reader device adapted to read the unique identity or attribute of the animal from a tag applied to the animal, such as on an ear.

Alternatively, the dose applicator is adjusted, or otherwise adapted such that a successful dose volume is the full volume the dose adapter can deliver, whether that full volume is adjusted per subject animal, or for a group of subject animals.

Preferably the position data stores the amount of medication that is applied in that dose based on the at least one characteristic (information, such as the size of the chamber).

Preferably the volume of the dose applied, or data to calculate that volume, to that at least one subject animal is stored along with the unique identity or attribute of at least the at least one subject animal the dose is, or is to be, applied to. According to an aspect, the volume is stored in the external device, or retrieved by the external device by means of a communication with the RFID reader device adapted to read the unique identity or attribute and the volume of treatment to be applied, from the tag applied to the animal.

Preferably the time stamp data is an actual time, date or is a code that can be synchronised to determine the time and/or date of the dose(s).

Preferably the at least one characteristic is a unique identifier of the dose applicator, area, diameter or radius of the piston, or volume the piston displaces in a full stroke from the first position to the second position.

The at least one characteristic is retrieved from information on the applicator. The information is for instance a size of the chamber, an area, diameter or radius of the piston, or volume the piston displaces in a full stroke from the first position to the second position, during delivery of a dose.

Preferably the at least one subject animal may be a group of subject animals, and it is only necessary to identify the group of subject animals, rather than an individual subject animal.

Preferably there is a third sensor, the needle sensor unit, to sense whether there has been suitable contact with the at least one subject animal.

Preferably the suitable contact may be time dependent, pressure on, or displacement of, or any combination thereof of a component of the dose applicator.

Preferably the suitable contact may be sensing whether an application portion at the applicator end has moved the correct distance and/or time. The application portion may be a profile surrounding the needle.

Preferably the application portion is a sheath (or profile).

Preferably the sheath covers and uncovers a needle at the applicator end and whether the sheath has been displaced enough (whether time or distance) for correct depth insertion of the needle.

Preferably the second sensor, when provided, may be an RFID sensor, optical code sensor or similar.

Preferably the sensing unit, has, or is connected, or connectable to a transceiver to transmit the at least the first data piece and receive other application data.

Preferably the on-board memory from time to time, in real time, or when instructed, transmits the data stored therein via the transceiver.

Preferably the transceiver transmits the first data piece in real time, or once dosing of the at least one animal, or group of animals is complete.

Preferably a successful dose is classed as one that includes any one of more of the following attributes: a dose volume at the specified level, or at least greater than a minimum dose volume and less than a maximum dose volume, sufficient contact time with the animal, or movement of a subject animal contact portion.

Preferably at least the first sensor unit contains an array of magnetic field sensors each set a known distance apart from each other to sense the magnetic element when in proximity of the magnetic field sensors.

Preferably the signal strength from a particular magnetic field sensor is proportional to the distance the magnetic element is from that magnetic field sensor.

Preferably the sign of the signal from each magnetic field sensor is dependent on which side of a centre line, perpendicular to a line of movement of the magnetic element, of that magnetic field sensor the magnetic element is on.

Preferably the array is linear.

Preferably the position of the magnetic element between two adjacent magnetic field sensors is calculated by comparing the signal strength between the two adjacent magnetic fields sensors and multiplying that comparison by the distance between them. The signal strength of one magnetic field sensor is at a peak value when the magnetic element is precisely in front of (aligned with) the magnetic field sensor, at a minimum distance therefrom. Therefore, when the signal strength is less that the peak value, it means that the magnetic element is distancing from said one magnetic field sensor (after reaching its peak value). When distancing from said sensor, the magnetic element approaches to the other magnetic field sensor and the signal strength thereof (of the other sensors) increases up to the peak value, when the magnetic element is precisely in front of (aligned with) the other magnetic field sensor, at a minimum distance therefrom. Considering the peaks is advantageous, since position is detected based on decrease from a peak, and not necessarily considering the value of the signal. Moreover, the distance from the two adjacent sensors is known. Therefore, based on the distance of the magnetic element from each of the two adjacent sensors, and the signal strength of each of the two adjacent sensors, position of the magnetic element between the adjacent sensors may be calculated, for instance by interpolation.

Preferably the signal from a first magnetic field sensor is stronger when the magnetic element is nearer the first magnetic field sensor, than a signal from a second magnetic field sensor proximate the first magnetic field sensor.

Preferably the distance the magnetic element, and hence the piston, has moved along its line of travel is calculated by adding the distance between the current two adjacent magnetic field sensors the magnetic element is between, and the number of other adjacent magnetic field sensors pairs it has crossed previously.

Preferably the change of sign of the signal gives a precise location of the magnetic element relative to that magnetic field sensor, and provides a calibration point each time the centre line of a magnetic field sensor is crossed.

Preferably the third sensor (the needle sensor unit) operates in a similar way to the first sensor unit to calculate a proportional distance the application portion has moved.

Preferably the array is aligned with a principal line of movement of the element to be sensed.

Alternatively, the third sensor (needle sensor unit) only senses whether the application portion has moved to a certain position, for example, a microswitch or similar when the application portion has moved to a set position.

Preferably the array of magnetic sensors will sense across a wide range of dose applicators the sensing unit is applied to, such range of dose applicators potentially having a variance of distance between them of the magnetic element(s) distance to the sensor(s) on the sensing unit.

Alternatively, the third sensor (needle sensor unit) senses whether the application portion has moved its full distance only.

In a first aspect, the present disclosure consists in **an applicator with on board data sensing** (in short, applicator), to sense a dose of medication applied to at least one subject animal.

The applicator includes,
a dosing body comprising or including,
at least one barrel (or chamber);
a piston moveable (or movable means) within the at least one barrel to stroke between a first position and a second position, wherein, in use, movement of the piston towards the first position can draw a first fluid into the barrel, and movement of the piston towards the second position can force the first fluid out of the barrel, the piston;
at least one fluid inlet valve to allow the fluid to flow into the at least one barrel at least under action of the piston, and at least one fluid outlet valve to allow the first fluid to flow out of the at least one barrel at least under action of the piston;
a piston actuating assembly having a user operable handle to drive the piston directly or indirectly between the first position and the second position,
a sensing unit, connected via a complimentary fitting to the dosing body or piston actuating assembly, including,
a first sensor unit to sense in a non-contact way movement of the piston between the first position and the second position,
a power source to power the sensing element,
wherein the applicator can be used to dose one or more subject animals and wherein a application data record of the dose application and at least one subject animal identity are recorded in the sensing unit.

The applicator may include a second sensor to sense and record a unique identity of at least the at least one subject animal, the dose, or part thereof, is applied to.

Preferably the first position, and or the second position is variable to enable variation of the dose to be delivered.

Preferably the sensing unit has an onboard memory to store one or more of the application data records.

Preferably the sensing unit, has, or is connected, or connectable to a transceiver to receive application data, and transmit application data,

Preferably the piston actuating assembly is selectively engageable with the dosing body.

Preferably there is an actuation member between the user operable handle and the piston to drive the piston between the first position and the second position.

Preferably a connection between the actuation member and the piston, and or the dosing body and user operable handle is a releasable one.

Preferably the application is via needle in fluid communication with the at least one fluid outlet valve, and there is an application portion (or profile or guard), for example a sheath, that covers the needle in a covering position, and which pushes back when placed against the animal to expose the needle, the guard moving to an exposing position when the needle is fully inserted the correct depth into the animal.

Preferably there is a third sensor (needle sensor unit) to sense when the guard is in the covering position and in the exposing condition.

Preferably the first sensor unit uses a magnetic array to sense movement of a magnetic element that is moving proportionally to the movement of the piston between the first position and the second position.

Preferably the magnetic element is contained in, on, or is part of, the piston.

Preferably the sensing unit outputs a user sensible output to indicate,
a status of the application (successful, or not, or anywhere inbetween),
a status of the applicator such as empty or near empty,
a status of the sensing unit, such as powered on, powered off, transmitting, receiving, power source status,
a combination of the above status to indicate the applicator is ready to apply the medication.

Preferably the user sensible output is haptic and includes light(s), sound(s), or any combination of these.

Preferably the status of the application includes that the application portion is fully in the exposed condition (indicating the needle or other applicator is exposed and inserted the correct depth, or time), there is medication present (that is, the applicator or supply thereto is not empty), the piston is moved fully from the first position to the second condition (that is the correct full dose is applied).

Preferably the status of the application includes that there is sufficient contact time with or pressure against, the animal to allow a successful dose to be delivered.

Preferably the status of the application includes the sequence of movement of the guard and piston is done in the correct order.

Preferably the piston will only return from the second position to the first position if there is a supply of medication present (that is the supply has not run out).

The sensing unit can be removed from the dosing body and fitted to another dosing body or applicator to provide data about that applicator and its use via the complimentary fitting. Preferably the sensing unit cannot be removed from the dosing body and cannot be fitted to another dosing body or applicator to provide data about that applicator and its use via the complimentary fitting. In other words, the attachment of the sensing unit to the dosing body is permanent.

Preferably there are different complimentary fittings so that only certain sensing units can be connected to certain applicators.

Alternatively, the complimentary fitting is common between many different dose applicators.

Preferably the sensing unit can determine and store information about the applicator such as, but not limited to applicator dose volume, or can have the dose volume entered, the dose volume being the volume dispensed when the piston moves from the first position to the second position, whether this is the same or different to the dose that is actually delivered.

Preferably the transceiver can upload data to, and/or receive data from, a smart device, or the cloud, either in real time or after a work shift is complete.

Preferably the sensing unit can be paused partway during a run of application, for example when replacing and purging medicine supply.

Preferably the first sensor unit, or an onboard analysis of the output thereof, can interpolate between magnets to know with high accuracy the movement of the piston and therefore the dosage delivered.

Preferably the sensing unit will also time stamp the data for each application, or group of application.

Preferably the real time upload of data from the, or multiple sensing unit(s) can be used to control other equipment, such as a cattle press, gate or similar.

Preferably at least the first sensor unit contains an array of magnetic field sensors each set a known distance apart from each other to sense the magnetic element when in proximity of the magnetic field sensors.

Preferably the signal strength from a particular magnetic field sensor is proportional to the distance the magnetic element is from that magnetic field sensor.

Preferably the sign of the signal from each magnetic field sensor is dependent on which side of a centre line, perpendicular to a line of movement of the magnetic element, of that magnetic field sensor the magnetic element is on.

Preferably the array is linear.

Preferably the position of the magnetic element between two adjacent magnetic field sensors is calculated by comparing the signal strength between the two adjacent magnetic fields sensors and multiplying that comparison by the distance between them.

Preferably the signal from a first magnetic field sensor is stronger when the magnetic element is nearer the first magnetic field sensor, than a signal from a second magnetic field sensor proximate the first magnetic field sensor.

Preferably the distance the magnetic element, and hence the piston, has moved along its line of travel is calculated by adding the distance between the current two adjacent magnetic field sensors the magnetic element is between, and the number of other adjacent magnetic field sensors pairs it has crossed previously.

Proportional signal strength between the last crossed magnetic field sensor and the magnetic field sensor being approached and multiplying this by the known distance between these two sensors, to the cumulative magnetic field sensors already crossed, each of their distances being known also.

Preferably the change of sign of the signal gives a precise location of the magnetic element relative to that magnetic field sensor, and provides a calibration point each time the centre line of a magnetic field sensor is crossed.

Preferably the third sensor operates in a similar way to the first sensor to calculate a proportional distance the sheath has moved.

Preferably the first sensor unit, or sensors using the array of magnetic field sensors is adapted to be calibrated during the first cycle of the dose applicator.

Preferably the array of magnetic sensors will sense across a wide range of dose applicators the sensing unit is applied to, such range of dose applicators potentially having a variance of distance between them of the magnetic element(s) they are to sense.

Alternatively, the third sensor (needle sensor unit) senses whether the sheath has moved its full distance only.

In another aspect, the present disclosure consists in a **method of use of a dose applicator with on board data sensing** for sensing a dose of medication applied to at least one subject animal by the dose applicator, comprising or including the steps of,
attaching a sensing unit to the dose applicator,
entering information into the sensor unit, directly, or indirectly through a smart or other device or upload, related to the dose of medication
applying the dose to the subject animal,
the sensing unit,
outputting a proportional position signal from the first sensor unit of an amount of movement of a piston of the dose applicator, directly or indirectly, the piston containing or having a sensed element to move therewith, the movement of the piston from a first position to or towards a second position dispensing the dose of the medication to, and out, an applicator end of the dose applicator,
optionally identifying a unique identity or attribute of at least the at least one subject animal the dose is, or is to be, applied to, via a second sensor,
storing data associated with the position signal (and the unique identity or attribute) with a time stamp, and at least one characteristic of the dose applicator that when combined with the position signal or position data allows a determination of whether a full dose or part dose was dispensed,
such that the amount of medication applied to each said at least one subject animal is known, and whether that dose was successful given the identity of that at least one animal.

Preferably the information entered relates to any one or more of dose target amount, the medication, the applicator used, or similar.

Preferably the user sensible output is haptic and includes light(s), sound(s), vibration(s) or any combination of these.

Preferably the status of the application includes that the application portion is fully in the exposed condition (indicating the needle or other applicator is exposed and inserted the correct depth, or time), there is medication present (that is, the applicator or supply thereto is not empty), the piston is moved fully from the first position to the second condition (that is the correct full dose is applied).

Preferably the status of the application includes that there is sufficient contact time with or pressure against, the animal to allow a successful dose to be delivered.

Preferably the status of the application includes the sequence of movement of the guard and piston is done in the correct order.

Preferably the piston will only return from the second position to the first position if there is a supply of medication present (that is the supply has not run out).

Preferably there are different complimentary fittings so that only certain sensing units can be connected to certain applicators.

Alternatively, the complimentary fitting is common between many different dose applicators.

Preferably the second sensor, transceiver, or a second transceiver can read an RFID tag, such as, but not limited to the applicator, subject animal, group of subject animals, user, application location, and or medication type, dose and volume being applied.

Preferably the sensing unit can determine and store information about the applicator such as, but not limited to applicator dose volume, or can have the dose volume entered, the dose volume being the volume dispensed when the piston moves from the first position to the second position, whether this is the same or different to the dose that is actually delivered.

Preferably the transceiver can upload data to, and/or receive data from, a smart device, or the cloud, either in real time or after a work shift is complete.

Preferably the sensing unit can be paused partway during a run of application, for example when replacing and purging medicine supply.

Preferably the first sensor unit, or an onboard analysis of the output thereof, can interpolate between magnets to know with high accuracy the movement of the piston and therefore the dosage delivered.

Preferably the sensing unit will also time stamp the data for each application, or group of application.

Preferably the real time upload of data from the, or multiple sensing unit(s) can be used to control other equipment, such as a cattle press, gate or similar.

Preferably at least the first sensor unit contains an array of magnetic field sensors each set a known distance apart from each other to sense the magnetic element when in proximity of the magnetic field sensors.

Preferably the signal strength from a particular magnetic field sensor is proportional to the distance the magnetic element is from that magnetic field sensor.

Preferably the sign of the signal from each magnetic field sensor is dependent on which side of a centre line, perpendicular to a line of movement of the magnetic element, of that magnetic field sensor the magnetic element is on.

Preferably the array is linear.

Preferably the position of the magnetic element between two adjacent magnetic field sensors is calculated by comparing the signal strength between the two adjacent magnetic fields sensors and multiplying that comparison by the distance between them.

Preferably the signal from a first magnetic field sensor is stronger when the magnetic element is nearer the first magnetic field sensor, than a signal from a second magnetic field sensor proximate the first magnetic field sensor.

Preferably the distance the magnetic element, and hence the piston, has moved along its line of travel is calculated by adding the distance between the current two adjacent magnetic field sensors the magnetic element is between, and the number of other adjacent magnetic field sensors pairs it has crossed previously.

Proportional signal strength between the last crossed magnetic field sensor and the magnetic field sensor being approached and multiplying this by the known distance between these two sensors, to the cumulative magnetic field sensors already crossed, each of their distances being known also.

Preferably the change of sign of the signal gives a precise location of the magnetic element relative to that magnetic field sensor, and provides a calibration point each time the centre line of a magnetic field sensor is crossed.

Preferably the third sensor (needle sensor unit) operates in a similar way to the first sensor unit to calculate a proportional distance the sheath has moved.

Preferably the first sensor unit, or sensors using the array of magnetic field sensors is adapted to be calibrated during the first cycle of the dose applicator.

Preferably the array of magnetic sensors will sense across a wide range of dose applicators the sensing unit is applied to, such range of dose applicators potentially having a variance of distance between them of the magnetic element(s) they are to sense.

Alternatively, the third sensor unit senses whether the sheath has moved its full distance only.

In another aspect, the disclosure consists in **an applicator with on board data sensing** as described herein with reference to any one or more of the accompanying drawings.

In another aspect, the disclosure consists in **a method of use of an applicator with on board data sensing** as described herein with reference to any one or more of the accompanying drawings.

As used herein the term "and/or" means "and" or "or", or both.

As used herein "(s)" following a noun means the plural and/or singular forms of the noun.

The term "comprising" as used in this specification means "consisting at least in part of". When interpreting statements in this specification which include that term, the features, prefaced by that term in each statement, all need to be present, but other features can also be present. Related terms such as "comprise" and "comprised" are to be interpreted in the same manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7).

The entire disclosures of all applications, patents and publications, cited above and below, if any, are hereby incorporated by reference.

This invention may also be said broadly to consist in the parts, elements and features referred to or indicated in the specification of the application, individually or collectively, and any or all combinations of any two or more of said parts, elements and features, and where specific integers are mentioned herein which have known equivalents in the art to which this invention relates, such known equivalents are deemed to be incorporated herein as if individually set forth.

Other aspects of the invention may become apparent from the following description which is given by way of example only and with reference to the accompanying drawings.

### BRIEF DESCRIPTION OF THE DRAWINGS

Preferred forms of the present invention will now be described with reference to the accompanying drawings in which;
**Figure 1** Shows in side view at **(A)** a dose applicator to attach to a supply of medication and which a user can then dispense a medication form onto a subject animal, **(B)** the same dose applicator from Figure 1A but with the connector applied to the dose applicator, and at **(C)** the same dose applicator but with the sensing unit now attached via the connector,
**Figure 2** Shows in side view at **(A)** a different dose applicator to attach to a supply of medication and which a user can then dispense a medication form onto a subject animal, **(B)** the same dose applicator from Figure 1A but with the connector applied to the dose applicator, and at **(C)** the same dose applicator but with the sensing unit now attached via the connector,
**Figure 3** Shows an example of the range of dose applicators the sensing unit can fit to and sense data from,
**Figure 4** Shows a front isometric view of a form of the sensing unit to in part carry out the present invention, by connecting to a dose applicator and sensing data therefrom,
**Figure 5** Shows a rear isometric view of the sensing unit and the complimentary fitting to enable mounting or connection to the dose applicator,
**Figure 6** Shows an exploded view of the form of the sensing unit from Figures 4 and 5, showing the control input buttons, first and second sensors, power source, onboard memory and transceiver,
**Figure 7** Shows a rear isometric view of a dose applicator with the sensing unit connected thereto at **(A)** with a first visual feedback, for example a first colour, which for example maybe green and associated with a successful dose application, and at **(B)** with a second visual feedback, for example a second colour, which for example may be red and associated with an unsuccessful dose application,
**Figure 8** Shows a side view of a dose applicator similar to that from Figure 7, indicating the preferred locations of the sensed element in the dose applicator for piston movement, and in this case sheath movement to uncover the applicator end, in this case containing a needle for sub-cutaneous dose application,

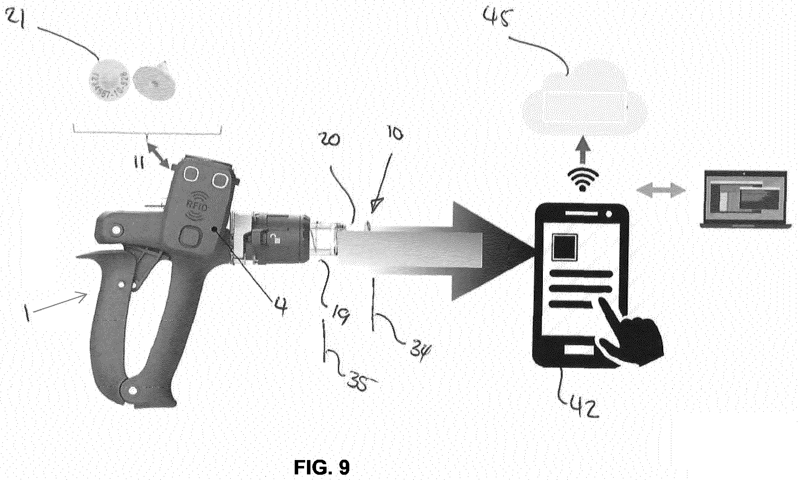

**Figure 9** Shows a schematic of a dose applicator with sensing unit attached, with the second sensor to sense at least the unique identity of the subject animal, the first sensor unit sensing the piston movement as the dose applicator dispenses, and the third sensor unit to sense for example whether there has been suitable contact with the subject animal, the sensing unit adapted to capture the signals from the various sensors, store those signals as data, and then transmit from time to time to a receiver, such as shown here a smart device such as a cell phone, the smart device able to hand the data off to a data cloud server, and or applications programming interface for a third party to use the data,
**Figure 10** Shows a schematic where there are multiple sending units attached to multiple dose applicators for multiple medication and similar applications to a subject animal, the dose application, whether successful or otherwise, from each dose applicator being recorded, and optionally in this case only allowing, or signalling to allow exit of the subject animal from the press on successful dosing from each dose applicator,
**Figure 11** Shows a schematic of a smart device that can transmit to and receive data from the sensing unit, and that can be used to set aspects of the sensing unit, for example, but not limited to, the area of the piston, swept volume of similar so that combined with the sensed movement of the piston the dose dispensed from the dose applicator can be sensed, the minimum dose and maximum dose that indicates a successful dose,
**Figure 12** Shows a schematic of the sensing system used at least in the first sensor unit, and
**Figure 13** Shows a further schematic of the sensing system used at least in the first sensor unit.
**Figure 14** Is a further schematic of the applicator according to the present invention.
**Figure 15** Is a diagram block of a method for controlling application of a treatment according to the present invention.

### DETAILED DESCRIPTION OF THE INVENTION

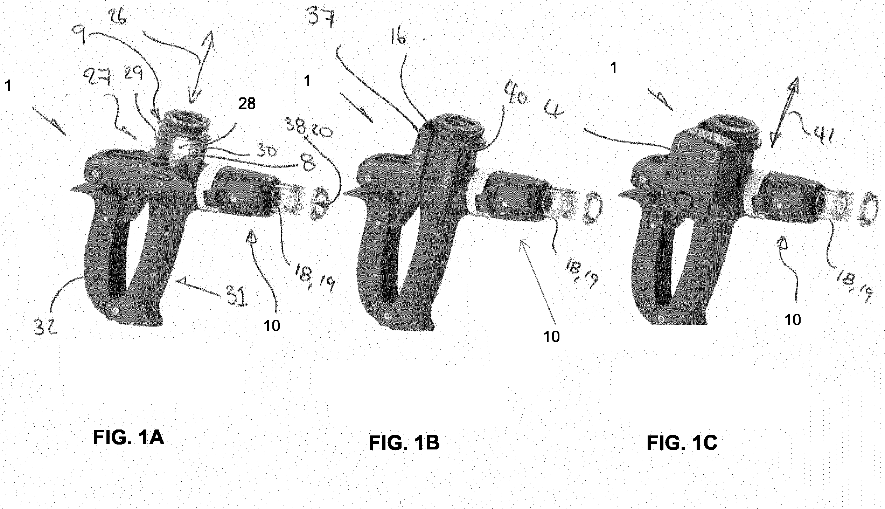

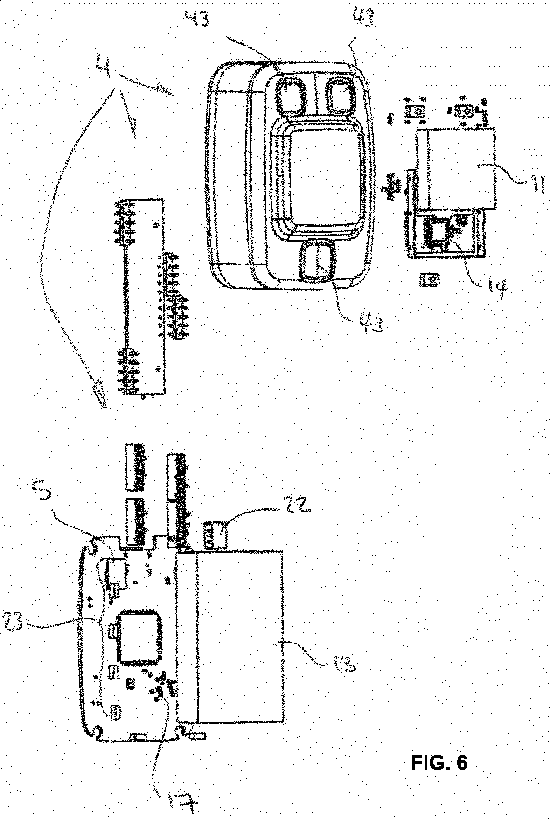

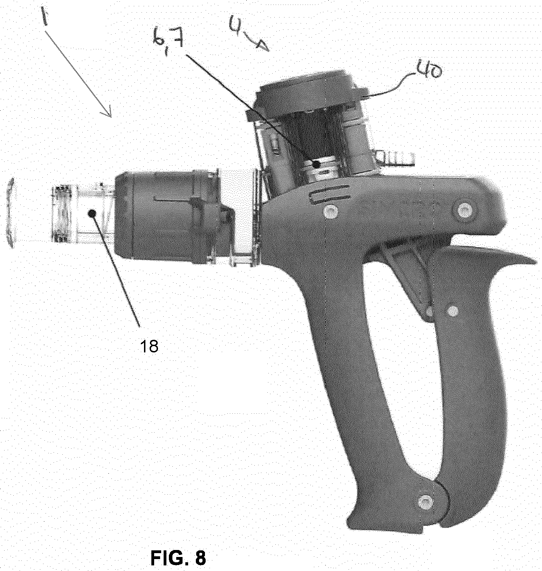

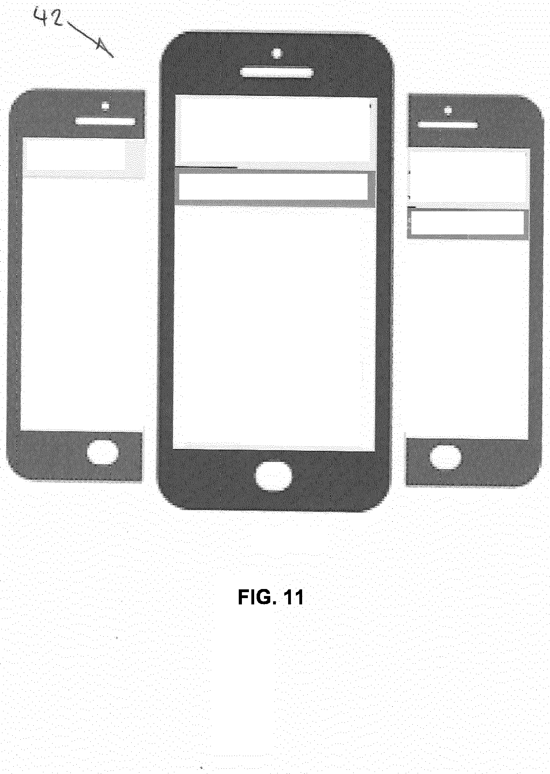

Preferred embodiments will now be described with reference to Figures 1 through 15.

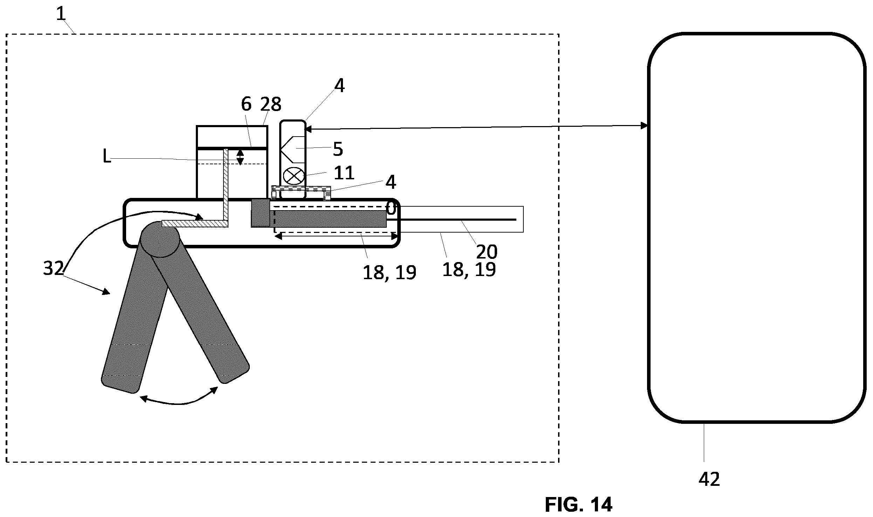

A first embodiment of an applicator is disclosed with reference to the schematic drawing of figure 14.

The applicator, indicated with reference number 1, is adapted to provide a treatment for an animal, by spraying, injection of other type of application. The treatment maybe therefore stored inside the applicator in gas or in fluid form or any other status (like a gel) depending on the treatment. The applicator 1 includes a chamber 28 where the gas or fluid or gel, etc is stored.

The applicator 1 in fig. 14 is in the form of a gun and the chamber is on a top portion of the gun, arranged in a vertical orientation; however, nothing prevents, for instance, that the applicator has a completely different shape and the chamber a different orientation, to cite one an horizontal direction, or that the chamber is part of a more complex body of the applicator.

Means 6 are movable in the chamber 28 in order to push the treatment (liquid, gas, gel, etc) outside the chamber 28. In figure 14, only for exemplificative purpose, an outlet of the chamber 28, through which the treatment may flow, is represented in fluid communication with a duct which is connected to a needle 20, adapted to inject the fluid into an animal body, in use. However, different fluid connections between the chamber 28 storing the fluid, liquid or gas and a terminal end, for instance a nozzle (instead of a needle) of the applicator, may be provided, according to different embodiments. The terminal end is suitable to deliver the treatment on the animal and its shape, size and fluid connection with the chamber are generally chosen depending on the treatment.

The movable means 6 is for instance a piston 6. Different movable means may be provided according to different embodiments of the application, with the same function of pushing or enabling ejection of the fluid outside the chamber and towards the animal, under control of an operator. In this respect, actuating means 32 for the operator are schematically represented in figure 14 as a couple of handles 32, one movable with respect to the other, connected to the piston 6 by means of an actuating device adapted to move the piston 6.

The features of the applicator 1 disclosed above may be fully mechanical parts, for instance same mechanical parts of an applicator 1 as known from the prior art.

According to the present invention, the applicator 1 is provided with electrical components of the type disclosed below.

A control module 4 or sensing unit 4 is provided to sense the movement of the piston 6, and to ultimately determine or allow determination of the quantity of treatment delivered, in order to check if the dose ejected is sufficient or not for an animal to be treated. The control module 4 is arranged in correspondence to the chamber 28 to check movement of the piston 6 inside it. This check may be done in different ways, one way being based on a non-contact coupling between a sensor unit 5 in the control module 4 and a magnet in the chamber 28. The magnet is associated to the piston 6. In this respect, an applicator 1 of the prior art which is not provided with the magnet and the control module 28, may be adapted to measure the quantity of fluid delivered by adapting the piston 6 (i.e. coupling a magnet to the piston) and by attaching a control module 4 to the applicator 1. Such adaptation is supported by an adapter 40, which is schematically represented in figure 14. The adapter 40 include means for engage the applicator 1 and means for engaging the control module 4 and coupling it to the chamber 28. The engagement of the adapter 40 with the applicator and/or the engagement of the adapter 40 with the control module 4 is preferably breakable, when a force is applied to the control module or the adapter. This prevents reusing the control module with another applicator.

The control module includes a memory and a processor. The sensor unit 5 is adapted to measure a length L of movement of the movable means 6 in the chamber 28, when the movable means 6 are actuated through the actuating means 32 before releasing. The length L is indicated in figure 14. More particularly, the sensor unit 5 detects a signal or signals which depends on the position of the magnet (and the piston 6) along a path where the piston is actuated and, based on the signal or signals, determine a starting position and an end position of the piston when a dose is delivered, and therefore the length L of the movement. The length of the movement is proportional to the quantity of the fluid or gas or liquid delivered, and is calculated based on the information of the applicator 1 (in particular the size of the chamber)

Communication means are provided in the control module for communicating with an external device 42, also depicted in fig. 14 in the form of a smartphone or table. The external device is a hub adapted to receive information from the applicator 1 but also from many other devices in radio communication with it, for instance via Bluetooth. These other devices are suitable to control many other parameters of the animal, for instance a weight or an identity. The applicator 1, instead is particular important to communicate to the external device that the animal has been subject to a dose treatment and, most importantly, whether or not such dose has been applied in a sufficient measure and/or in a correct way, in other words if the animal has been treated effectively.

For instance, the length of movement L in figure 14 may correspond, based on the features of the chamber (in particular its size or volume), to a quantity of fluid which is considered insufficient (or exaggerated) for the animal to which it has been delivered. Determination of quantity ejected from the chamber may be done inside the control module or outside thereof, i.e. inside the external module, based on the signal(s) detected by the sensor unit 5.

Even when the quantity of fluid, gas or gel ejected through the application 1 is considered sufficient to make the treatment, it may happen that such quantity is not actually delivered to the animal body, for instance because something goes wrong or is not properly done between the terminal end of the applicator and the body of the animal. For instance, if the terminal end is a needle 20 and the needle 20 is not properly inserted in the animal's body, an amount of fluid ejected by the applicator 1 may be in the normal range for the treatment but no fluid enters the animal body.

To further check the amount of fluid actually injected, the applicator includes a profile or guard 18, 19 which is depicted in the left side of fig. 14. The profile 18, 19 surrounds the needle 20 to prevent contacts of the needle 20 at rest (when the injection is not in course). The profile 18, 19 is retractable with respect to the needle 20 to allow insertion of the needle 20 in the animal's body under a pressure applied on the profile 18, 19 which is sufficient to move the profile from the position at rest to an operative position suitable to deliver the injection. The position at rest and the operative position has a predetermined distance.

A needle sensor unit 11 is adapted to measure a movement of the profile 18, 19 with respect to the needle 20 and the communication means are configured to transmit to the external device 42 information concerning or suitable for determining if the operative position is reached, and preferably for how long the needle is kept in the operative position. The duration of ejection of fluid, gas or gel from the applicator 1 may be compared to the duration of injection of fluid, gas or gel into the animal body to determine whether or not a sufficient amount of the treatment ejected has been injected.

In particular, the control module 4 is configured to detect a time Tb when the needle guard (the profile) starts reaching the operative position and a time Te when the needle guard starts moving back to the position at rest. The control module 4 calculates the quantity of liquid injected into the animal between time Tb and time Te or to transmit to the external device time Tb and time Te to calculate in the external device said quantity of liquid injected into the animal.

In order to apply correctly the treatment/medicament to the animal, the dose ejection/injection has to start only when the needle guard is completely retracted at the operative position and the dose ejection/injected has to be completed before the needle guard starts going back to the rest position. It is therefore the movement of the piston between Tb and Te which gives information on whether or not a full dose has been delivered to the animal. Movement of the piston before Tb or after Te, instead, gives information on quantity of liquid lost (since ejected from the chamber but not correctly injected into the animal).

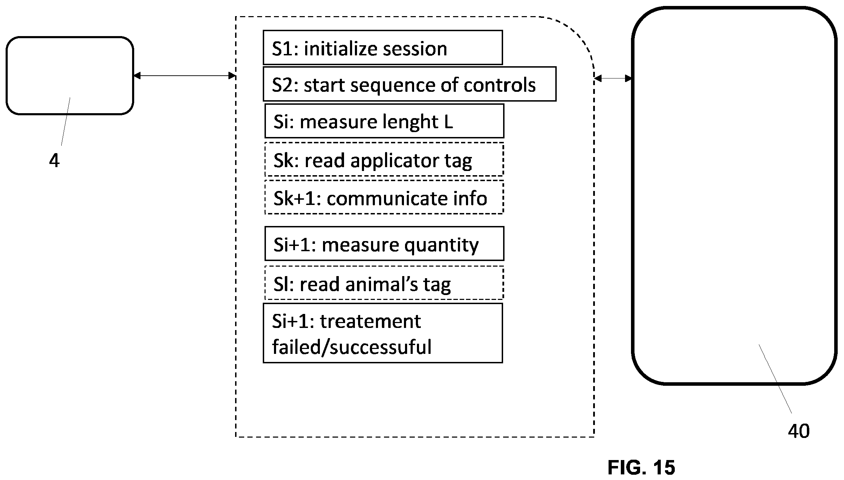

A method to control correct application of a treatment to an animal, is now disclosed with reference to figure 15.

The method includes a communication between the control module 4 of the applicator 1 mentioned above and an external device 42, preferably a smartphone 42 or tablet.

The communication is preferably based on a radio communication protocol, for instance Bluetooth, but other protocols may be used.

At an initial stage, a communication session between the control module 4 and the external device 42 is set up. The initial stage may include recognizing the control module and the external device according to a predefined authentication patent. The external device, in the same way in which recognize the control module 4, may recognize one or more other devices provided with a communication interface, such a balance used to measure the weight of the animal, or an RFID reader of a tag attached to the animal, to cite some. Each one of the other devices may contribute to monitoring the animal according to a sequence of controls which are driven by the external device. The external device is programmed, in this respect, to implemented the function of a smart hub collecting information from several devices, and informing the using on which device in the sequence he has to use for monitoring the animal, for applying the treatment, and to ensure appropriate controls and data retrieval, which may be requested for subsequent analytics.

For what concerns the applicator 1, the following communication with the external device is provided.

After the initial stage and authentication, the applicator 1 measures through the sensor unit 5 of the control module 4 a length of movement of the movable means 6 in the chamber 28, in particular when the movable means 6 are actuated through the actuating means 32 of the applicator.

The step of measuring through the sensor unit 5 is part of a sequence of controls to be applied in the communication session mentioned above, for treatment of the animal. Indeed, a transmission from the control module 4 to the external device 42 is provided to send information concerning, or suitable for determining in the external device 42, a quantity of the treatment ejected outside the chamber 28.

Once the quantity is transmitted or determined, the external device compare the quantity delivered to the animal with the quantity expected to be delivered, this last (quantity expected) being based on information on the animal itself. For instance, this information may be retrieved by means of a communication between the external device and a reader of the tag on the animal, storing, among other, a weight, an age of the animal, or directly the amount of the specific treatment which is expected for the specific animal.

Based on the result of the comparison, the external device determines whether the treatment has not been applied correctly, in particular when the quantity of the treatment is less than a predetermined quantity.

In figure 15 steps of the method which are considered not essential for monitoring the treatment are in dashed lines. Among these steps, reading information on the applicator 1, from a tag associated to the applicator 1, with the aim of determining information on the applicator, such as the size of the chamber and to ultimately determine the quantity of fluid delivered with a dose, is not mandatory. Indeed, such information may be programmed by factory, in the control module 4 destined to be attached in a non-removable way to the applicator 1, so as the control module itself may determine the quantity of fluid delivered.

Further examples and details of the features introduced above with reference to schematic figures 14 and 15 are disclosed here below, with reference to figures 1-13, using the same reference numbers, where possible.

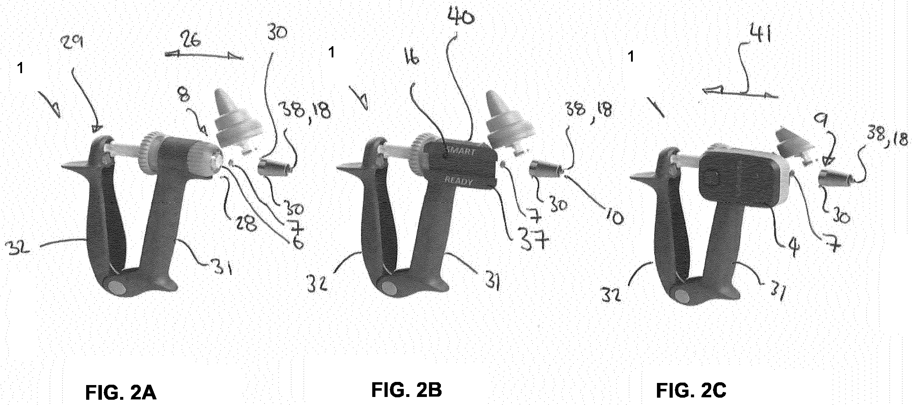

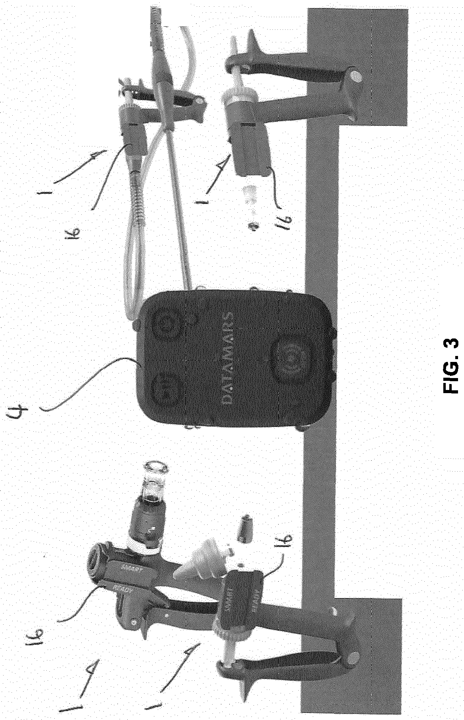

A first example dosing applicator 1 is shown in Figure 1A, a further example dosing applicator is shown in Figure 2A, and a range of them is shown in Figure 3. In a preferred embodiment each dose applicator 1 has a complimentary fitting 16 that enables fitting and retention of the sensing unit 4 to the dose applicator 1. The complimentary fitting may be unitary with one or more parts of the dose applicator or may be an adapter applied separately to an existing dose applicator, and may not be able to be removed, or only with difficulty. In this way existing dose applicators can be retrofitted to work with the sensing unit.

In the examples shown this is a sliding dove tail arrangement, however any complimentary fitting that retains the sensing unit 4 to the dose applicator 1 in a rigid way that will not disengage through normal use, but that can be easily applied and removed as needed would be suitable. In the preferred form the complimentary fitting is common across the range of applicators the sensing unit 4 is to be applied to. In other, less desirable forms a sensing unit 4 may only fit a certain range of dose applicators, there being other sensing units to fit other ranges, or there is only a one-to-one fitting to each applicator type. In other forms there may be a locking element to retain the sensing unit to the dose applicator, and this locking element may require a special or controlled access key to control who, or when the sensing unit may be removed.

The dose applicator, for example that shown in Figure 1A, B and C has at least one dose barrel 28 within which reciprocates a piston 8. Between the barrel 28 and a supply of medication (not shown) is a one-way fluid inlet valve 29, and between the barrel and the medication outlet 38 at applicator end 10 is a one-way fluid outlet valve 30.

The medication path being from the supply of medication, through the one-way inlet valve 29, to the barrel as the piston moves from the second position to the first position displacing the medication therein, and then out of the barrel via the one way fluid outlet valve 30 as the piston moves from the first position 8 to the second position 9.

The piston is moved, at least from the first position 8 to the second position 9 by the user moving the user operable handle 32, which is part of the piston actuating assembly 31, which in turn causes an actuation member 33 to move the piston from the first position 8 to the second position 9. Return of the piston from the second position 9 to the first position 8 may be under a bias, such as that which might return the user operably handle 32 to the ready to administer position, such as shown in Figure 1A. The movement of the user operable handle pulling the piston back down the barrel.

In the embodiment shown the dose applicator 1 consists of the piston actuating assembly 31 and the dosing body 27, which contains the barrel, inlet and outlet valves and applicator end and outlet. The embodiment shown here has the assembly 31 removable from the body 27.

The dose applicator in Figures 1A, B and C has an application portion 18, which in the form shown is a sheath 19. The application portion 18 is spring loaded so that at rest it is extended in a covering position 34 as shown, for example in Figure 1B. In this position it is covering the outlet 38 of the dose applicator, such as for example a needle 20 (though not visible here). When located against the surface of a subject animal the application portion 18 as a sheath moves, in this case, backward into the dose applicator 1 and exposes the outlet, in this case being a needle 20.

The sensing unit 4 is shown connected to the dose applicator 1 in Figure 1C, has a first sensor unit 5 to detect movement of the piston. The first sensor unit senses in a noncontacting way. The method by which it detects the movement will be described shortly. The piston 6 has a sensed element 7 that moves with it which the sensor senses. In sensing the first sensor unit will detect accurately the movement of the piston 6 between the first position 8 and second position 9. Thus, when the piston movement is combined with at least one characteristic of the dose applicator, such as the dose applicator itself (from which information can be derived), piston area, diameter or radius of the piston, or volume the piston displaces in a full stroke from the first position to the second position, then the volume of medication in the dose delivered from the applicator end is known.

On or about the time of administering the dose to the subject animal the sensing unit 4 also senses through a second sensor 11 a unique identity of attribute of the subject animal, to enable identification of that subject animal, or a group of subject animals. For example, but not limited to, the RFID tag 21 of the animal, or group, a geospatial identifier (GPS or similar grid), for example when in a particular location on a farm or in a pen or stock yard, sow crate or similar, a visual identifier, such as a bar code, QR code, unique pattern on the animal.

Likewise, the second sensor can also be used to sense further information such as, of the dose applicator, user, application location, and or medication type, dose and volume to be applied. Again, this may be via any one or more of and RFID 21, visual code or similar. Identifying the dose applicator may for example supply information about the dose volume it is capable off and inform the calculation of dose delivered in conjunction with the data from the first sensor unit. Identifying the user can be important in gaining insights into operator behaviour, such as who is a well-trained and able operator of the dose applicator, and who is not, and requires further training or re-tasking. Identifying the medication type will inform what is the appropriate correct dose for a particular animal, for example a medication will have a certain efficacy range of amount per body weight of animal. The weight of the animal may be known from a data base when that animal is identified, or weighed at the time of application, and with the amount per body weight of the identified medication will determine what is a correct dose. This can then be compared to the actual dose applied to determine whether a correct dose was delivered or not.

It is understood that while a dose of medication is dispensed (dose delivered) from the dose applicator 1, this does not necessarily mean that a subject animal has received that full dose, or that the dose actually delivered was the correct one. For example, squeezing the user operable handle 32 in the absence of correct application, for example time on the animal, or correct insertion depth of needle, and order of application, to the subject animal is not a correct dose application, even if the correct volume for that weight animal is pushed out of the applicator end. For example, when applying a subcutaneous medication, the dose applicator must first be applied to the animal and the needle inserted the correct distance, and then the handle 32 squeezed and the correct volume of dose applied, for that animal weight, age or size, while the needle is still in the animal. Missing any of these steps or doing them out of order risks incorrect dosing.

Therefore, a third sensor unit may be present to detect correct or suitable contact has been made by the dose applicator with the animal. Such a sensor may be a proximity sensor to the animal or may detect movement of a portion of the dose applicator, such as for example the application portion. Movement of the application portion may uncover an applicator, for example a needle, and indicate the needle has been applied into the skin of the animal. The third sensor unit may detect accurately the movement of the part being applied to the animal, in a similar way the first sensor unit does, or may detect the part has moved from a first position, e.g. a covering position 34 to an uncovering position 35, on the basis that covering to uncovering is achieved by bringing the dose applicator against the surface or orifice of the animal.

The third sensor t unit herefore may be for example, but not limited to, a second version of that used in the first sensor unit, or a less accurate version that simply detects whether in a covered or uncovered position, microswitches to detent movement from a covered to uncovered position, or at least the uncovered position, and may include a time sensing as well for how long the dose applicator is held in that position.

Another variant of dose applicator 1 is shown in Figures 2A, B and C. The like numerals refer to the like features from Figure 1A, B and C and the dose applicator in Figure 2A, B and C operates in a similar manner, with a piston 6 sliding in a barrel 28 to pull medication into the barrel 28 from a source of medication (not shown) via a one way inlet valve 29, when moving from a second position 9 to a first position 8, and then expel the dose of medication from the barrel when the piston 6 moves from the first position 8 to the second position 9, via the one way outlet valve 30, to the applicator at the applicator end 10. Again, the user operates a user operable handle 32 to move the piston 6. The piston again will have a sensed element 7 that moves with it which the sensing unit 4 can track.

Again, the sensing unit 4 attaches to the dose applicator 1 via a complimentary fitting 16. This may, preferably, be the same fitting as earlier described so the one sensing unit 4 can be used with many different dose applicators 1. The adapter 40 may be unitary with the dose applicator, or may be removable with a tool, or may be fitted thereon, but very difficult to remove. Again, being able to add the adapter 40 to an already existing tool or dose applicator 1 means the sensing unit 4 can be easily fitting to existing tools 1. If no sensing element 7 is present to move with the piston 6, then one can be fitted by disassembling the dose applicator 1, or part thereof in the usual way for maintenance and cleaning. Either the sensed element 7 can be added to, or connected directly or indirectly with, the existing piston 6 to move therewith, or a new piston or part thereof may be added that contains the sensed element 7.

In both Figure 1A, B and C, and Figure 2A, B and C the longitudinal axis 41 of the sensing unit 4 is aligned with the line of movement 26 of the piston 6. This is because the first sensor unit is aligned this way. It is only important, or at least important that the first sensor unit is substantially aligned with this line of movement, its orientation on the sensing element is not. Again, a second sensor is present for the same function earlier described, and a third sensor unit also, to sense if needed movement or otherwise of the application portion 18.

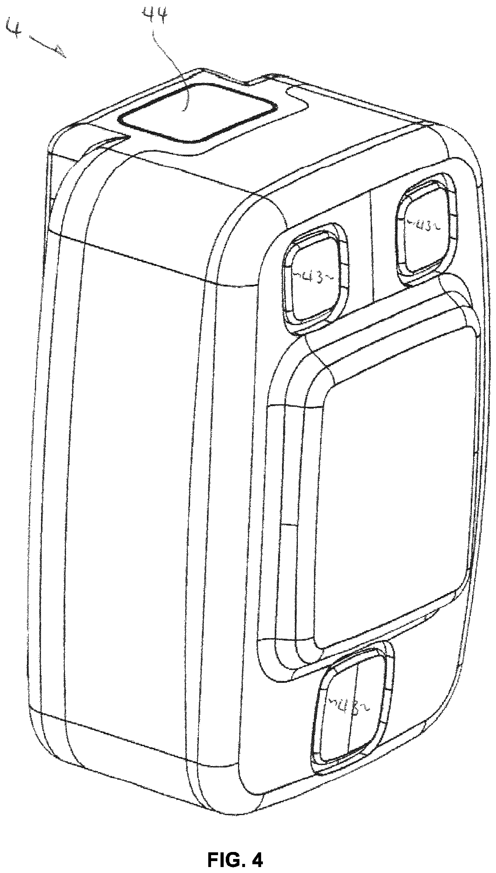

The sensing unit 4, for example in detail as shown in Figures 4 through 7 is stand alone and so has an onboard power source 13 to power it. The power source may be replaceable or rechargeable for example using a plug-in charger or may charge using inductive power transfer when the sensing unit 4 is placed on a suitable IPT charge base. On board memory 14 is also present to store, even if temporarily the positional data and other data from the first sensor unit, second sensor, third sensor unit at least one characteristic, time stamp or combination thereof. This can then be downloaded after each dose, or stored and downloaded from time to time as needed, for example after dosing is complete using a plug-in transfer, or preferably using a wireless transfer, for example Bluetooth or WiFi or ANT+ or similar to another device, such as, but not limited to a smart device 42, via a transceiver 22 on the sensing unit 4. Sending of information from the unit 4 may be pulled from the unit, or pushed, either automatically, or initiated by the smart device or by the unit itself.

The sensing unit 4 is preferably water proof and robust to deal with normal usage in a farming or similar situation. There are actuation buttons 43 to turn the unit on and off, pause recording by the sensing unit (for example when the supply of medication needs changing) change settings, or initiate transceiving data to or from the unit 4, for example recording the information from the second sensor 11.

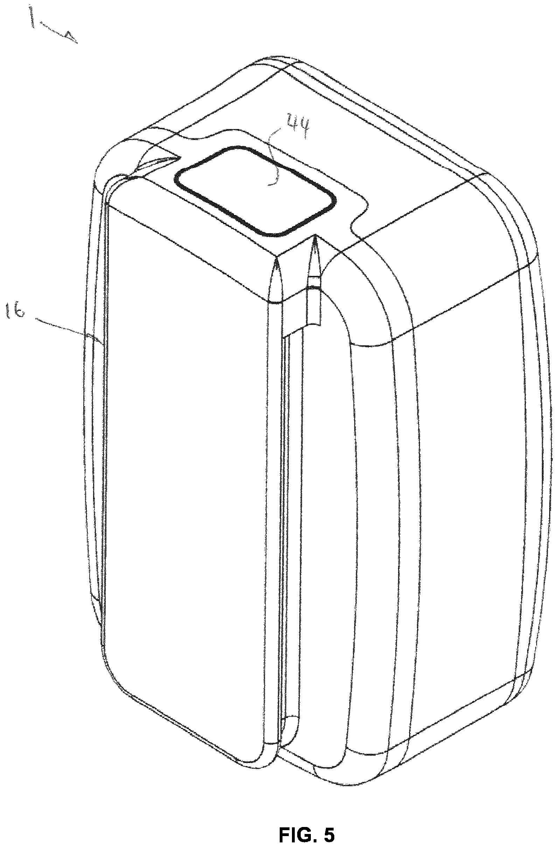

In Figure 5 the complimentary fitting 16 of the unit is shown and is a dove tail fitting. It may be held in place on the dose applicator 1 by this fitting using friction is there is a slight tapering or similar, or by a further latched engagement, a fastener or similar.

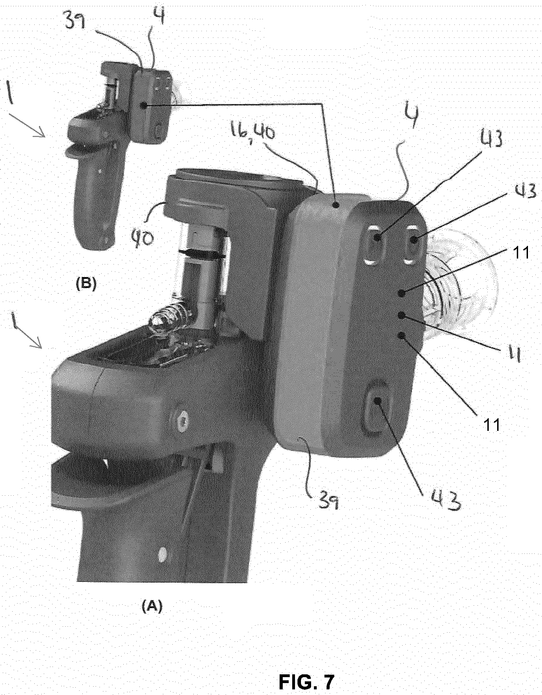

The sensing unit may have one or more feedback systems present to inform the user of various occurrences. One example of these is visual 39 and is shown in Figure 7, where one colour shows for one occurrence, and another for another. For example, the band on the sensing unit 4 periphery may be a visual indicator 39 may show green for a successful dose, or data send/receive, and red for an unsuccessful dose or data/send/receive. The unit 4 may also vibrate in one or more ways, or make one or more sounds, and there may also be a combination of these, for example light, sound and vibration. These may also indicate the unit is in standby, ready to use, low on power, fully charged, medication is running low or other aspects needed by the user.

In use, for example in Figure 9 the sensing unit 4 is powered on using the appropriate button 43 and may have data sent to it, for example dose rates required, medication etc from a smart device 42 or similar, via physical or wireless transfer. Such data may refer to the medication, dose rates (that is amount per weight, age or size of the subject animal), calibration of the time stamp or similar. This may prepare the sensing unit 4 for use with the dose applicator 1.

The user then uses the dose applicator 1 to apply medication, for example by injection using the needle 20 at the applicator end 10. The dose applicator is brought into contact with the surface of the animal 3 and the unique identity of the animal is sensed by the second sensor 11, for example by the RFID tag 21 of that animal. The user then pushes the applicator end 10 against the animal, causing the sheath 19 in this instance to move from the covering position 34 of the needle, to slide back as the needle is inserted into the animal, to the exposing position 35. This movement, or range of movement, may be sensed by the third sensor unit 17. The time this is held in the position against the animal is sensed, along then with the movement of the piston as the user actuates the handle 32, or other trigger to move the piston and dispense the medication. The removal of the dose applicator 1 from the surface of the animal is then sensed as the sheath 19 moves from the exposed position to the covering position to then cover the needle, this again is sensed, and so from the time stamp of covered, to exposed, to covered again for example the time in contact with the animal is recorded, or at least the time stamps are so that correct contact time can be calculated. The amount of medication delivered is also sensed by the first sensor unit as outlined below. A green light, or other haptic feedback as earlier described is then shown to tell the user the dosage was successful, or a red light or similar haptic feedback is shown to tell the user the dosage was not successful.

The sensing unit 4 may also send data it has collected from its three sensors, such as the dose delivered to each identified subject animal, and whether each dose was successful or not. This may occur for each dose, or periodically or at the end of the shift the container of medication, or once a certain number or group of animals is dosed.

This data may then be uploaded to a central database or cloud 45 for later use, or supplied to an application programming interface, as shown in Figure 9.

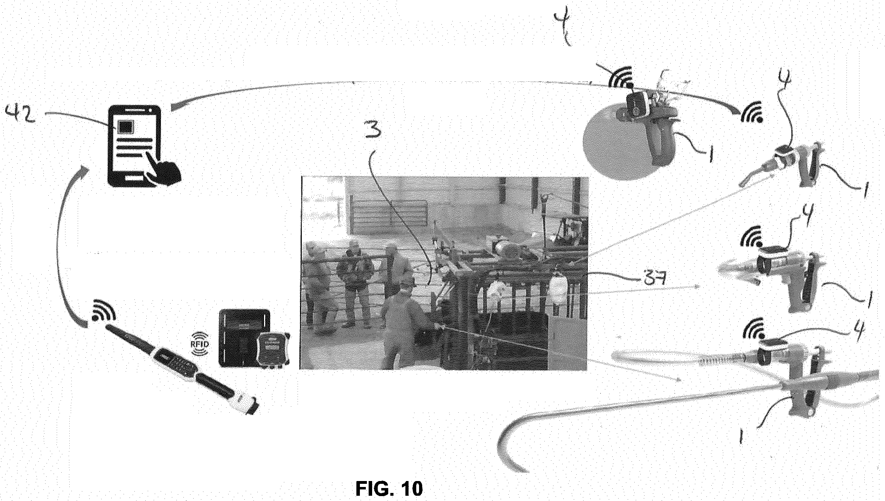

The sensing unit 4 or many sensing units 4 may also communicate with other devices or equipment 37 to control them. For example, as shown in Figure 10 many sensing units 4 are attached to a number of dose applicators 1 to apply several medications to an animal 3. The animal is held in a gate or crush 37. The gate or crush, or the user operating them may only receive a release signal once each of the sensing units 4 confirms that a correct dose has been successfully delivered to the animal.

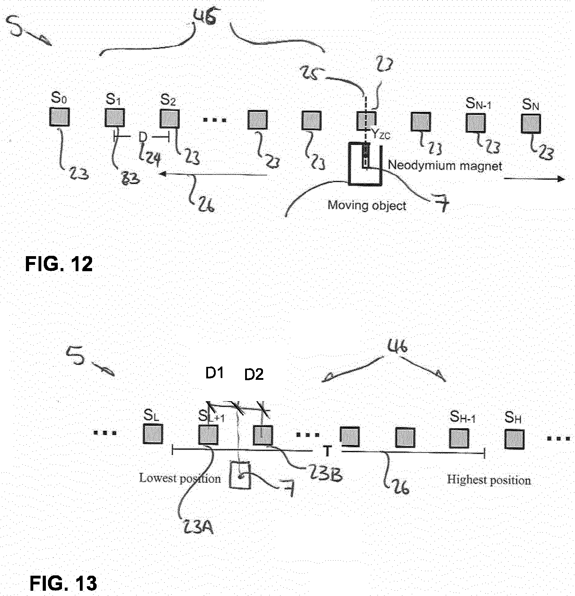

A preferred implementation for the first sensor unit 5, and optionally a form of the third sensor unit 17 will now be described with reference to Figures 12 and 13. It is to be understood that other positional non-contact sensing methods may also be used, instead or, or in conjunction with this method, for example, but not limited to magnetic, optical, and capacitive sensing. The first sensor unit 5 contains an array 46 of magnetic field sensors 23 each set a known distance 24 apart from each other to sense the magnetic element 7, for example when inside the piston 6, when in proximity of the magnetic field sensors 23. The signal strength output from a particular magnetic field sensor 23 is proportional to the distance D1 the magnetic element is from that magnetic field sensor, and D2 from the other sensor, if between two sensors 23A and 23B as shown in Figure 13. The sign of the signal from each magnetic field sensor 23 is dependent on which side of a centre line 25, perpendicular to a line of movement 26 of the sensed element 7, of that magnetic field sensor 23 the magnetic element 7 is on.

In the preferred form the array 46 of magnetic field sensors 23 is linear and matches the path of the sensed element.

The position of the magnetic element 7 between two adjacent magnetic field sensors 23A and 23B is calculated by comparing the signal strength between the two adjacent magnetic fields sensors and multiplying that comparison by the distance 24 between them.

The signal from a first magnetic field sensor 23A is stronger when the magnetic element 7 is nearer the first magnetic field sensor 23A, than a signal from a second magnetic field sensor 23B proximate the first magnetic field sensor.

The distance the magnetic element 7, and hence the piston 6, has moved along its line of travel 26 is calculated by adding the distance (being a calculated proportion of the distance 24) between the current two adjacent magnetic field sensors 23A and 23B the magnetic element 7 is between, and the number of other adjacent magnetic field sensors pairs it has crossed previously.

In the preferred form the change of sign of the signal gives a precise location of the magnetic element 7 relative to that magnetic field sensor 23, and provides a calibration point each time the centre line 25 of a magnetic field sensor 23 is crossed.

As mentioned preferably the third sensor unit operates in a similar way to the first sensor unit to calculate a proportional distance the application portion has moved.

In the preferred form the first sensor unit, or sensors using the array of magnetic field sensors is adapted to be calibrated during the first cycle of the dose applicator.

In this way, the exact positioning of the smart module on the side of the injector is not required, it just needs to remain substantially steady throughout the dosing cycle.

This main advantage of the above method is that it allows flexibility of different distances between the magnet and the sensor whilst maintaining the same level of positional accuracy. So positional accuracy is not related specifically to magnetic field intensity. This makes the sensing unit 4 adaptable to a variety of existing dose applicators 1 with different physical spacing between sensed element 7 and sensing unit 4. Also, the sensor array is able to "auto-calibrate" during the first cycle of the plunger. In this way, the exact positioning of the smart module on the side of the injector is not required. This allows for ample manufacturing tolerances and mechanical fit variances within the adapter without compromising positional accuracy.

The foregoing description of the invention includes preferred forms thereof. Modifications may be made thereto without departing from the scope of the invention.

For instance, in one preferred embodiment

The applicator of a treatment for an animal comprises
- a chamber 28 including the treatment to be applied;
- means 6 movable in the chamber 28 to eject the treatment outside the chamber 28 towards the animal, the movable means 6 being preferably a piston 6;
- actuating means 32 functionally connected to the movable means 6 to actuate the movable means 6, the actuating means 32 being preferably a handle 32;
- a control module 4 coupled to the chamber 28 outside thereof, including a processor;
- a sensor unit 5 in the control module 4, designed to measure a length L of movement of the movable means 6 in the chamber 28, when the movable means 6 are actuated through the actuating means 32 before releasing;
- wireless communication means in the control module for communicating with an external device 42, wherein
the wireless communication means are configured to transmit to the external device 42 information concerning or suitable for determining a quantity of said treatment ejected outside the chamber 28.

The treatment is a liquid to be injected into the animal by means of a needle 20 of the applicator 1, the applicator includes a guard 18, 19 surrounding the needle 20 to prevent contacts of the needle 20 at rest, the guard 18, 19 being retractable with respect to the needle 20 to allow insertion of the needle 20 in the animal's body under a pressure applied on the guard 18, 19 which is sufficient to move the guard from the position at rest to an operative position suitable to deliver the injection, the position at rest and the operative position having a predetermined distance, wherein
- the control module 4 includes a needle sensor unit 11 adapted to measure a movement of the guard 18, 19 with respect to the needle 20, and wherein
- said wireless communication means are configured to transmit to the external device 42 information concerning or suitable for determining if the operative position is reached.

The control module 4 is further configured to detect a time Tb when the needle guard starts reaching said operative position and a time Te when the needle guard starts moving back to said position at rest, wherein the control module 4 is further configured to
calculate the quantity of liquid injected into the animal between the time Tb when the needle guard starts reaching said operative position and the time Te when the needle guard starts moving back to said position at rest, or to
transmit to the external device said time Tb when the needle guard starts reaching said operative position and the time Te when the needle guard starts moving back to said position at rest, to calculate in the external device said quantity of liquid injected into the animal.

## Claims

1. Applicator (1) of a treatment for an animal, comprising
- a chamber (28) including the treatment;
- means (6) movable in the chamber (28) to eject the treatment;
- actuating means (32) to actuate the movable means (6);
- a control module (4) coupled to the chamber (28) outside thereof, including
*a processor,
*a sensor unit (5), designed to measure a length (L) of movement of the movable means (6) in the chamber (28), when the movable means (6) are actuated through the actuating means (32) before releasing, and
*wireless communication means configured to transmit to an external device (42) information concerning or suitable for determining a quantity of said treatment ejected outside the chamber (28),
wherein the treatment is a liquid, and the applicator (1) includes a needle (20) **characterised in that** :
- the applicator further includes a needle guard (18, 19),
- the needle guard (18, 19) surrounds the needle (20) to prevent contacts of the needle (20) at rest and is retractable from the needle (20) to allow insertion of the needle (20) in the animal's body under a pressure applied on the needle guard (18, 19) for moving the needle guard (18, 19) to an operative position having a predetermined distance from the position at rest;
- the control module (4) includes a needle guard sensor unit (11) adapted to measure a movement of the needle guard (18, 19) with respect to the needle (20),
- the wireless communication means are configured to transmit to the external device (42) information concerning or suitable for determining if the operative position is reached,
- the control module (4) is further configured to:
- detect a first time (Tb) when the needle guard (18, 19) starts reaching said operative position and a second time (Te) when the needle guard (18, 19) starts moving back to the position at rest,
- compare the duration of injection in the operative position, which is the difference between said second time (Te) and said first time (Tb), with the duration of the ejection of fluid outside the chamber, which is the time for moving the movable means (6) for said length (L), and determine that the treatment has been applied correctly.

2. Applicator according to claim 1, wherein the movable means (6) is a piston.

3. Applicator according to claim 1, wherein said wireless communication means are configured to transmit to the external device (42) further information, concerning at least one among the following:
- start time and end time of the treatment,
- number of the treatment among a plurality of treatments deliverable with the applicator (1) from when the control module (4) is applied to the applicator (1).

4. Applicator according to claim 1, including an adapter (40) including means to engage to the applicator (1) and means to engage to the control module (4) and coupling the control module (4) to the chamber (28).

5. Applicator according to claim 3, wherein the engagement of the adapter (40) with the applicator and/or the engagement of the adapter (40) with the control module (4) is breakable.

6. Applicator according to claim 2, including a memory storing information on the chamber (28) to which the control module (4) is coupled, said information including a size of the chamber (28), and wherein the processor is configured to calculate the quantity of the treatment ejected outside the chamber (28) based on the length of the movement of the piston and on the information of the chamber (28).

7. Applicator according to claim 2, wherein the control module (4) is configured to receive information on the chamber (28) from the external device (42), said information including a size of the chamber (28), and to calculate the quantity of the treatment ejected outside the chamber (28) based on the length of the movement of the piston and on said information on the chamber (28) received from the external device (42).

8. Applicator according to claim 2, wherein the control module (4) is configured to transmit the length of movement of the piston to the external device (42), so as the quantity of the treatment ejected outside the chamber (28) based on the length of the movement of the piston is calculated in the external device (42), based on information of the chamber (28) stored in the external device (42), the information including a size of the chamber (28).

9. Applicator according to claim 2, wherein the sensor unit (5) includes an array of magnetic field sensors and the piston includes a magnetic element; wherein
- the magnetic field sensors are each set at a known distance apart from each other to sense the magnetic element when in proximity of the magnetic field sensors, wherein
- a signal strength from each one of said magnetic field sensors is proportional to the distance the magnetic element is from said each one of said magnetic field sensors;
- a sign of the signal from each one of said magnetic field sensor is dependent on which side of a centre line, perpendicular to a line of movement of the magnetic element, of said each one of said magnetic field sensor the magnetic element is on.

10. Applicator according to claim 9, wherein
- the control module is configured to calculate a position of the magnetic element between two adjacent magnetic field sensors by comparing the signal strength between the two adjacent magnetic fields sensors and multiplying the result of said comparison by a distance between the adjacent magnetic field sensors;
- a signal from a first magnetic field sensor of said adjacent magnetic field sensors is stronger when the magnetic element is nearer to the first magnetic field sensor, than a signal from a second magnetic field sensor of said adjacent magnetic field sensors more proximate to the first magnetic field sensor;
- the control module is configured to calculate the distance the magnetic element, and hence the piston, has moved along its line of travel by adding the distance between said adjacent magnetic field sensors the magnetic element is between, and the number of other adjacent magnetic field sensors pairs it has crossed.

11. Applicator according to claim 9, wherein
- the control module is configured to detect a change of sign of the signal and to associate it to a precise location of the magnetic element relative to one of said magnetic field sensors, and to provide a calibration point each time the centre line of said one of said magnetic field sensors is crossed.

12. Applicator according to claim 1, wherein the needle guard sensor unit (11) is configured to sense whether the needle guard (18, 19) has moved to a certain position, the certain position being associated to a microswitch.

13. Applicator according to claim 1, wherein said wireless communication means is a Bluetooth module or a WiFi module or an RFID or NFC module, and said external device (42) is a smartphone or a rugged device (42).

14. Method to control correct application of a treatment to an animal, the method including a communication between a control module (4) of an applicator (1) according to claim 1 and an external device (42), the communication being based on a radio communication protocol, the method comprising the following steps:
- initializing a communication session between the control module (4) and the external device (42);
- measuring with the sensor unit (5) of the control module (4) a length of movement of the movable means (6) in the chamber (28), when the movable means (6) are actuated through the actuating means (32) of the applicator, said step of measuring with the sensor unit (5) being part of a sequence of controls to be applied in said session when the animal is treated;
- transmit from the control module (4) to the external device (42) information concerning or suitable for determining in the external device (42) a quantity of said treatment ejected outside the chamber (28);
- determining that the treatment has not been applied correctly if the quantity of said treatment is less than a predetermined quantity, **characterized in that**
- the treatment is a liquid,
- the applicator includes a needle (20) and a needle guard (18, 19),
- the needle guard (18, 19) surrounding the needle (20) to prevent contacts of the needle (20) at rest and being retractable from the needle (20) to allow insertion of the needle (20) in the animal's body under a pressure applied on the needle guard (18, 19) for moving the needle guard (18, 19) to an operative position having a predetermined distance from the position at rest;
- the control module (4) includes a needle sensor unit (11) adapted to measure a movement of the needle guard (18, 19) with respect to the needle (20),
- the wireless communication means are configured to transmit to the external device (42) information concerning or suitable for determining if the operative position is reached,
- the control module (4) is configured to:
- detect a first time (Tb) when the needle guard (18, 19) starts reaching said operative position and a second time (Te) when the needle guard (18, 19) starts moving back to the position at rest,
compare the duration of injection in the operative position, which is the difference between said second time (Te) and said first time (Tb), with the duration of the ejection of fluid outside the chamber, which is the time for moving the movable means (6) for said length (L), and determine that the treatment has been applied correctly.

15. Method according to claim 14, wherein the movable means (6) includes a piston, the applicator (1) stores information on the chamber (28) to which the control module (4) is coupled, including a size of the chamber (28), the processor calculates the quantity of the treatment ejected outside the chamber (28) based on the length of the movement of the piston and on the information of the chamber (28).

## Patentansprüche

1. Applikator (1) für eine Behandlung eines Tieres, umfassend
- eine Kammer (28), die die Behandlung umfasst;
- Mittel (6), die in der Kammer (28) beweglich sind, um die Behandlung auszustoßen;
- Betätigungsmittel (32) zum Betätigen der beweglichen Mittel (6);
- ein Steuermodul (4), das außerhalb der Kammer (28) mit dieser verbunden ist, aufweisend
- einen Prozessor,
- eine Sensoreinheit (5), die so ausgelegt ist, dass sie eine Bewegungslänge (L) der beweglichen Mittel (6) in der Kammer (28) misst, wenn die beweglichen Mittel (6) vor dem Auslösen durch die Betätigungsmittel (32) betätigt wird, und
- drahtlose Kommunikationsmittel, die so konfiguriert sind, dass sie Informationen über eine Menge der Behandlung, die aus der Kammer (28) ausgestoßen wird, oder Informationen, die zur Bestimmung dieser Menge geeignet sind, an ein externes Gerät (42) übertragen,
wobei die Behandlung eine Flüssigkeit ist und der Applikator (1) eine Nadel (20) umfasst, **dadurch gekennzeichnet, dass**:
- der Applikator ferner einen Nadelschutz (18, 19) umfasst,
- der Nadelschutz (18, 19) die Nadel (20) umgibt, um Kontakte der Nadel (20) im Ruhezustand zu verhindern, und von der Nadel (20) zurückziehbar ist, um das Einführen der Nadel (20) in den Körper des Tieres, unter einem Druck, der auf den Nadelschutz (18, 19) ausgeübt wird, zu ermöglichen, um den Nadelschutz (18, 19) in eine Betriebsposition zu bewegen, die einen vorbestimmten Abstand von der Ruheposition aufweist;
- das Steuermodul (4) eine Nadelschutz-Sensoreinheit (11) umfasst, die so ausgelegt ist, dass sie eine Bewegung des Nadelschutzes (18, 19) in Bezug auf die Nadel (20) misst,
- die drahtlosen Kommunikationsmittel so konfiguriert sind, dass sie Informationen an das externe Gerät (42) übertragen, die sich darauf beziehen, ob die Betriebsposition erreicht ist, oder die sich dazu eignen, dies festzustellen,
- das Steuermodul (4) außerdem so konfiguriert ist, dass:
- einen ersten Zeitpunkt (Tb) erkennen, wenn der Nadelschutz (18, 19) beginnt, die Betriebsposition zu erreichen, sowie einen zweiten Zeitpunkt (Te), wenn der Nadelschutz (18, 19) beginnt sich in die Ruheposition zurückzubewegen,
- die Dauer der Injektion in der operativen Position, die die Differenz zwischen dem zweiten Zeitpunkt (Te) und dem ersten Zeitpunkt (Tb) ist, mit der Dauer des Ausstoßes von Flüssigkeit aus der Kammer, die die Zeit für die Bewegung der beweglichen Mittel (6) um die Länge (L) ist, zu vergleichen und festzustellen, dass die Behandlung korrekt durchgeführt wurde.

2. Applikator nach Anspruch 1, wobei das bewegliche Mittel (6) ein Kolben ist.

3. Applikator nach Anspruch 1, wobei die drahtlosen Kommunikationsmittel so konfiguriert sind, dass sie an das externe Gerät (42) weitere Informationen übertragen, die mindestens einen der folgenden Punkte betreffen:
- Beginn und Ende der Behandlung,
- Nummer der Behandlungen unter einer Vielzahl von Behandlungen, die mit dem Applikator (1) durchgeführt werden können, ab dem Zeitpunkt, an dem das Steuermodul (4) an den Applikator (1) angelegt wird.

4. Applikator gemäß Anspruch 1, der einen Adapter (40) mit Mitteln zum Verbinden mit dem Applikator (1) und Mitteln zum Verbinden mit dem Steuermodul (4) umfasst und das Steuermodul (4) mit der Kammer (28) verbindet.

5. Applikator gemäß Anspruch 3, wobei die Verbindung des Adapters (40) mit dem Applikator und/oder die Verbindung des Adapters (40) mit dem Steuermodul (4) unterbrechbar ist.

6. Applikator nach Anspruch 2, der einen Speicher umfasst, der Informationen über die Kammer (28) speichert, mit der das Steuermodul (4) gekoppelt ist, wobei die Informationen eine Größe der Kammer (28) umfassen, und wobei der Prozessor so konfiguriert ist, dass er die Menge der außerhalb der Kammer (28) ausgestoßenen Behandlung auf der Grundlage der Länge der Bewegung des Kolbens und der Informationen über die Kammer (28) berechnet.

7. Applikator nach Anspruch 2, wobei das Steuermodul (4) so konfiguriert ist, dass es Informationen über die Kammer (28) von dem externen Gerät (42) empfängt, wobei die Informationen eine Größe der Kammer (28) umfassen, und die Menge der Behandlung, die außerhalb der Kammer (28) ausgestoßen wird, auf der Grundlage der Länge der Bewegung des Kolbens und der Informationen über die Kammer (28), die von dem externen Gerät (42) empfangen werden, berechnet.

8. Applikator nach Anspruch 2, wobei das Steuermodul (4) so konfiguriert ist, dass es die Länge der Bewegung des Kolbens an das externe Gerät (42) überträgt, so dass die Menge der außerhalb der Kammer (28) ausgestoßenen Behandlung auf der Grundlage der Länge der Bewegung des Kolbens in das externe Gerät (42) berechnet wird, basierend auf Informationen über die Kammer (28), die in dem externen Gerät (42) gespeichert sind, wobei die Informationen eine Größe der Kammer (28) umfassen.

9. Applikator nach Anspruch 2, wobei die Sensoreinheit (5) eine Anordnung von Magnetfeldsensoren umfasst und der Kolben ein magnetisches Element umfasst; wobei
- die Magnetfeldsensoren jeweils in einem bekannten Abstand voneinander angeordnet sind, um das magnetische Element zu erfassen, wenn es sich in der Nähe der Magnetfeldsensoren befindet, wobei
- eine Signalstärke von jedem der Magnetfeldsensoren proportional zur Entfernung des magnetischen Elements von jedem der Magnetfeldsensoren ist;
- ein Vorzeichen des Signals von jedem der Magnetfeldsensoren davon abhängt, auf welcher Seite einer Mittellinie von jedem der Magnetfeldsensoren, senkrecht zu einer Bewegungslinie des magnetischen Elements, sich das magnetische Element befindet.

10. Applikator gemäß Anspruch 9, wobei
- das Steuermodul so konfiguriert ist, dass es die Position des magnetischen Elements zwischen zwei benachbarten Magnetfeldsensoren berechnet, indem es die Signalstärke zwischen den beiden benachbarten Magnetfeldsensoren vergleicht und das Ergebnis dieses Vergleichs mit dem Abstand zwischen den benachbarten Magnetfeldsensoren multipliziert;
- ein Signal von einem ersten Magnetfeldsensor der benachbarten Magnetfeldsensoren stärker ist, wenn das magnetische Element näher am ersten Magnetfeldsensor ist als ein Signal von einem zweiten Magnetfeldsensor der benachbarten Magnetfeldsensoren, der näher am ersten Magnetfeldsensor ist;
- das Steuermodul so konfiguriert ist, dass es die Strecke berechnet, die das magnetische Element und damit der Kolben entlang seiner Bewegungsbahn zurückgelegt hat, indem es die Entfernung zwischen den benachbarten Magnetfeldsensoren, zwischen denen sich das magnetische Element befindet, und die Anzahl der anderen benachbarten Paare an Magnetfeldsensoren, die es passiert hat, addiert.

11. Applikator gemäß Anspruch 9, wobei
- das Steuermodul so konfiguriert ist, dass es eine Änderung des Vorzeichens des Signals erkennt und es einem genauen Ort des magnetischen Elements in Bezug auf einen der Magnetfeldsensoren zuordnet und jedes Mal, wenn die Mittellinie des einen Magnetfeldsensors überschritten wird, einen Kalibrierungspunkt bereitstellt.

12. Applikator nach Anspruch 1, wobei die Nadelschutz-Sensoreinheit (11) so konfiguriert ist, dass sie erfasst, ob sich der Nadelschutz (18, 19) in eine bestimmte Position bewegt hat, wobei die bestimmte Position mit einem Mikroschalter verbunden ist.

13. Applikator nach Anspruch 1, wobei das drahtlose Kommunikationsmittel ein Bluetooth-Modul oder ein WiFi-Modul oder ein RFID- oder NFC-Modul ist und das externe Gerät (42) ein Smartphone oder ein robustes Gerät (42) ist.

14. Verfahren zur Kontrolle der korrekten Anwendung einer Behandlung bei einem Tier, wobei das Verfahren eine Kommunikation zwischen einem Steuermodul (4) eines Applikators (1) gemäß Anspruch 1 und einem externen Gerät (42) umfasst, wobei die Kommunikation auf einem Funkkommunikationsprotokoll basiert und das Verfahren die folgenden Schritte umfasst:
- Initialisierung einer Kommunikationssitzung zwischen dem Steuermodul (4) und dem externen Gerät (42);
- Messen einer Bewegungslänge der beweglichen Mittel (6) in der Kammer (28) mit der Sensoreinheit (5) des Steuermoduls (4), wenn die beweglichen Mittel (6) durch die Betätigungsmittel (32) des Applikators betätigt werden, wobei der Schritt des Messens mit der Sensoreinheit (5) Teil einer Folge von Kontrollen ist, die in der Sitzung anzuwenden sind, wenn das Tier behandelt wird;
- Übertragen von Informationen vom Steuermodul (4) an das externe Gerät (42), bezüglich einer Menge der Behandlung, die aus der Kammer (28) ausgestoßen wird, die bezogen auf oder geeignet zur Bestimmung im externen Gerät (42) sind;
- Feststellung, dass die Behandlung nicht korrekt durchgeführt wurde, wenn die Menge der Behandlung geringer ist als eine vorgegebene Menge, **dadurch gekennzeichnet, dass**
- die Behandlung eine Flüssigkeit ist,
- der Applikator eine Nadel (20) und einen Nadelschutz (18, 19) umfasst,
- der Nadelschutz (18, 19), der die Nadel (20) umgibt, um Kontakte der Nadel (20) im Ruhezustand zu verhindern, und der von der Nadel (20) zurückgezogen werden kann, um das Einführen der Nadel (20) in den Körper des Tieres zu ermöglichen, unter einem auf den Nadelschutz (18, 19) ausgeübten Druck in den Körper des Tieres eingeführt werden kann, um den Nadelschutz (18, 19) in eine Betriebsposition zu bewegen, die einen vorbestimmten Abstand von der Ruheposition aufweist;
- das Steuermodul (4) eine Nadelsensoreinheit (11) umfasst, die so ausgelegt ist, dass sie eine Bewegung des Nadelschutzes (18, 19) in Bezug auf die Nadel (20) misst,
- die drahtlosen Kommunikationsmittel sind so konfiguriert, dass sie Informationen an das externe Gerät (42) übertragen, die sich darauf beziehen, ob die Betriebsposition erreicht ist, oder die sich dazu eignen, dies festzustellen,
- das Steuermodul (4) so konfiguriert ist, um:
- einen ersten Zeitpunkt (Tb) zu erkennen, wenn der Nadelschutz (18, 19) beginnt, die Betriebsposition zu erreichen, sowie einen zweiten Zeitpunkt (Te), wenn der Nadelschutz (18, 19) beginnt, sich in die Ruheposition zurückzubewegen,
die Dauer der Injektion in der operativen Position, die die Differenz zwischen dem zweiten Zeitpunkt (Te) und dem ersten Zeitpunkt (Tb) ist, mit der Dauer des Ausstoßes von Flüssigkeit aus der Kammer, die die Zeit für die Bewegung der beweglichen Mittel (6) um die Länge (L) ist, zu vergleichen und festzustellen, dass die Behandlung korrekt durchgeführt wurde.

15. Verfahren nach Anspruch 14, wobei das bewegliche Mittel (6) einen Kolben umfasst, der Applikator (1) Informationen über die Kammer (28) speichert, mit der das Steuermodul (4) gekoppelt ist, einschließlich einer Größe der Kammer (28), wobei der Prozessor die Menge der außerhalb der Kammer (28) abgegebenen Behandlung auf der Grundlage der Länge der Bewegung des Kolbens und der Informationen über die Kammer (28) berechnet.

## Revendications

1. Applicateur (1) d'un traitement pour un animal, comprenant
- une chambre (28) comportant le traitement ;
- des moyens (6) mobiles dans la chambre (28) pour éjecter le traitement ;
- des moyens d'actionnement (32) pour actionner les moyens mobiles (6) ;
- un module de commande (4) couplé à la chambre (28) à l'extérieur de celle-ci, comportant
*un processeur,
*une unité de capteur (5), conçue pour mesurer une longueur (L) de déplacement des moyens mobiles (6) dans la chambre (28), lorsque les moyens mobiles (6) sont actionnés par le biais des moyens d'actionnement (32) avant la libération, et
*des moyens de communication sans fil configurés pour transmettre à un dispositif externe (42) des informations concernant ou adaptées à la détermination d'une quantité dudit traitement éjectée à l'extérieur de la chambre (28), dans lequel
le traitement est un liquide.
et l'applicateur (1) comporte une aiguille (20) **caractérisé en ce que** :
- l'applicateur comporte en outre une protection d'aiguille (18, 19),
- la protection d'aiguille (18, 19) entoure l'aiguille (20) pour éviter des contacts de l'aiguille (20) au repos et peut se rétracter par rapport à l'aiguille (20) pour permettre l'insertion de l'aiguille (20) dans le corps de l'animal sous une pression appliquée sur la protection d'aiguille (18, 19) pour déplacer la protection d'aiguille (18, 19) dans une position opérationnelle ayant une distance prédéterminée par rapport à la position au repos ;
- le module de commande (4) comporte une unité de capteur de protection d'aiguille (11) adaptée pour mesurer un déplacement de la protection d'aiguille (18, 19) par rapport à l'aiguille (20),
- les moyens de communication sans fil sont configurés pour transmettre au dispositif externe (42) des informations concernant ou adaptées à la détermination du fait que la position opérationnelle est atteinte ou non,
- le module de commande (4) est en outre configuré pour :
- détecter un premier instant (Tb) où la protection d'aiguille (18, 19) commence à atteindre ladite position opérationnelle et un deuxième instant (Te) où la protection d'aiguille (18, 19) commence à revenir à la position de repos,
- comparer la durée d'injection dans la position opérationnelle, qui est la différence entre ledit deuxième instant (Te) et ledit premier instant (Tb), à la durée d'éjection de fluide à l'extérieur de la chambre, qui est le temps de déplacement des moyens mobiles (6) pour ladite longueur (L), et déterminer que le traitement a été appliqué correctement.

2. Applicateur selon la revendication 1, dans lequel le moyen mobile (6) est un piston.

3. Applicateur selon la revendication 1, dans lequel lesdits moyens de communication sans fil sont configurés pour transmettre au dispositif externe (42) des informations supplémentaires, concernant au moins l'un des éléments suivants :
- l'instant de début et l'instant de fin du traitement,
- le numéro du traitement parmi une pluralité de traitements livrables avec l'applicateur (1) à partir du moment où le module de commande (4) est appliqué sur l'applicateur (1).

4. Applicateur selon la revendication 1, comportant un adaptateur (40) comportant des moyens de mise en prise avec l'applicateur (1) et des moyens de mise en prise avec le module de commande (4) et couplant le module de commande (4) à la chambre (28).

5. Applicateur selon la revendication 3, dans lequel la mise en prise de l'adaptateur (40) avec l'applicateur et/ou la mise en prise de l'adaptateur (40) avec le module de commande (4) peut être rompue.

6. Applicateur selon la revendication 2, comportant une mémoire stockant des informations sur la chambre (28) à laquelle le module de commande (4) est couplé, lesdites informations comportant une taille de la chambre (28), et dans lequel le processeur est configuré pour calculer la quantité du traitement éjectée à l'extérieur de la chambre (28) sur la base de la longueur du déplacement du piston et des informations de la chambre (28).

7. Applicateur selon la revendication 2, dans lequel le module de commande (4) est configuré pour recevoir des informations sur la chambre (28) en provenance du dispositif externe (42), lesdites informations comportant une taille de la chambre (28), et pour calculer la quantité du traitement éjectée à l'extérieur de la chambre (28) sur la base de la longueur du déplacement du piston et desdites informations sur la chambre (28) reçues en provenance du dispositif externe (42).

8. Applicateur selon la revendication 2, dans lequel le module de commande (4) est configuré pour transmettre la longueur de déplacement du piston au dispositif externe (42), de sorte que la quantité du traitement éjectée à l'extérieur de la chambre (28) sur la base de la longueur de déplacement du piston est calculée dans le dispositif externe (42), sur la base d'informations de la chambre (28) stockées dans le dispositif externe (42), les informations comportant une taille de la chambre (28).

9. Applicateur selon la revendication 2, dans lequel l'unité de capteur (5) comporte un réseau de capteurs de champ magnétique et le piston comporte un élément magnétique ; dans lequel
- les capteurs de champ magnétique sont chacun réglés à une distance connue les uns des autres pour détecter l'élément magnétique lorsqu'il se trouve à proximité des capteurs de champ magnétique, dans lequel
- une intensité de signal de chacun desdits capteurs de champ magnétique est proportionnelle à la distance de l'élément magnétique par rapport à chacun desdits capteurs de champ magnétique ;
- un signe du signal de chacun desdits capteurs de champ magnétique dépend du côté d'une ligne centrale, perpendiculaire à une ligne de déplacement de l'élément magnétique, de chacun desdits capteurs de champ magnétique sur lequel se trouve l'élément magnétique.

10. Applicateur selon la revendication 9, dans lequel
- le module de commande est configuré pour calculer une position de l'élément magnétique entre deux capteurs de champ magnétique adjacents en comparant l'intensité de signal entre les deux capteurs de champ magnétique adjacents et en multipliant le résultat de ladite comparaison par une distance entre les capteurs de champ magnétique adjacents ;
- un signal d'un premier capteur de champ magnétique desdits capteurs de champ magnétique adjacents est plus fort lorsque l'élément magnétique est plus proche du premier capteur de champ magnétique qu'un signal d'un deuxième capteur de champ magnétique desdits capteurs de champ magnétique adjacents plus proche du premier capteur de champ magnétique ;
- le module de commande est configuré pour calculer la distance sur laquelle l'élément magnétique, et donc le piston, s'est déplacé le long de sa ligne de déplacement en additionnant la distance entre lesdits capteurs de champ magnétique adjacents entre lesquels se trouve l'élément magnétique et le nombre d'autres paires de capteurs de champ magnétique adjacents qu'il a traversées.

11. Applicateur selon la revendication 9, dans lequel
- le module de commande est configuré pour détecter un changement de signe du signal et pour l'associer à un emplacement précis de l'élément magnétique par rapport à l'un desdits capteurs de champ magnétique, et pour fournir un point d'étalonnage à chaque fois que la ligne centrale dudit capteur desdits capteurs de champ magnétique est franchie.

12. Applicateur selon la revendication 1, dans lequel l'unité de capteur de protection d'aiguille (11) est configurée pour détecter si la protection d'aiguille (18, 19) s'est déplacée vers une certaine position, la certaine position étant associée à un microrupteur.

13. Applicateur selon la revendication 1, dans lequel ledit moyen de communication sans fil est un module Bluetooth, un module WiFi ou un module RFID ou NFC, et ledit dispositif externe (42) est un téléphone intelligent ou un dispositif robuste (42).

14. Procédé de commande de l'application correcte d'un traitement à un animal, le procédé comportant une communication entre un module de commande (4) d'un applicateur (1) selon la revendication 1 et un dispositif externe (42), la communication étant basée sur un protocole de communication radio, le procédé comprenant les étapes suivantes :
- l'initialisation d'une session de communication entre le module de commande (4) et le dispositif externe (42) ;
- la mesure avec l'unité de capteur (5) du module de commande (4) d'une longueur de déplacement des moyens mobiles (6) dans la chambre (28), lorsque les moyens mobiles (6) sont actionnés par le biais des moyens d'actionnement (32) de l'applicateur, ladite étape de mesure avec l'unité de capteur (5) faisant partie d'une séquence de commandes à appliquer dans ladite session lorsque l'animal est traité ;
- la transmission du module de commande (4) au dispositif externe (42) d'informations concernant ou adaptées à la détermination dans le dispositif externe (42) d'une quantité dudit traitement éjectée à l'extérieur de la chambre (28) ;
- la détermination du fait que le traitement n'a pas été appliqué correctement si la quantité dudit traitement est inférieure à une quantité prédéterminée, **caractérisé en ce que**
- le traitement est un liquide,
- l'applicateur comporte une aiguille (20) et une protection d'aiguille (18, 19),
- la protection d'aiguille (18, 19) entoure l'aiguille (20) pour éviter des contacts de l'aiguille (20) au repos et peut se rétracter par rapport à l'aiguille (20) pour permettre l'insertion de l'aiguille (20) dans le corps de l'animal sous une pression appliquée sur la protection d'aiguille (18, 19) pour déplacer la protection d'aiguille (18, 19) dans une position opérationnelle ayant une distance prédéterminée par rapport à la position au repos ;
- le module de commande (4) comporte une unité de capteur d'aiguille (11) adaptée pour mesurer un déplacement de la protection d'aiguille (18, 19) par rapport à l'aiguille (20),
- les moyens de communication sans fil sont configurés pour transmettre au dispositif externe (42) des informations concernant ou adaptées à la détermination du fait que la position opérationnelle est atteinte ou non,
- le module de commande (4) est configuré pour :
- détecter un premier instant (Tb) où la protection d'aiguille (18, 19) commence à atteindre ladite position opérationnelle et un deuxième instant (Te) où la protection d'aiguille (18, 19) commence à revenir à la position de repos,
comparer la durée d'injection dans la position opérationnelle, qui est la différence entre ledit deuxième instant (Te) et ledit premier instant (Tb), à la durée d'éjection de fluide à l'extérieur de la chambre, qui est le temps de déplacement des moyens mobiles (6) pour ladite longueur (L), et déterminer que le traitement a été appliqué correctement.

15. Procédé selon la revendication 14, dans lequel le moyen mobile (6) comporte un piston, l'applicateur (1) stocke des informations sur la chambre (28) à laquelle le module de commande (4) est couplé, y compris une taille de la chambre (28), le processeur calcule la quantité du traitement éjectée à l'extérieur de la chambre (28) sur la base de la longueur du déplacement du piston et des informations de la chambre (28).
